# EUROPEAN PATENT SPECIFICATION

(11) **EP 3 438 790 B1**
(45) Date of publication and mention of the grant of the patent: **02.06.2021**
(21) Application number: 17774186.5
(22) Date of filing: 09.03.2017
(51) Int. Cl.: G06F 3/01

(54) **INPUT DEVICE AND IMAGE DISPLAY SYSTEM**
EINGABEVORRICHTUNG UND BILDANZEIGESYSTEM
DISPOSITIF D'ENTRÉE ET SYSTÈME D'AFFICHAGE D'IMAGE

(30) Priority: 29.03.2016 JP 2016065637; 22.11.2016 JP 2016227032
(43) Date of publication of application: 06.02.2019
(73) Proprietor: Saito Inventive Corp., Minamitsuru-Gun, Yamanashi 401-0304 (JP)
(72) Inventor: SAITO, Norihiko, Minamitsuru-Gun Yamanashi 401-0304 (JP)
(74) Representative: Ablett, Graham Keith
(86) International application number: PCT/JP2017/009594
(87) International publication number: WO 2017/169641

(56) References cited:
- JP-A- 2005 165 670
- JP-A- 2005 267 174
- JP-A- 2013 210 888
- US-A1- 2006 268 109
- US-A1- 2008 245 955

## Description

### FIELD OF THE INVENTION

The present invention relates to an input device and an image display system.

### BACKGROUND ART

Hitherto, a 3D stereoscopic television, a head mounted display and the like have been known as devices that output a virtual stereoscopic structure to a three-dimensional virtual space. In addition, the virtual stereoscopic structure which is displayed on the three-dimensional virtual space of the 3D stereoscopic television or the head mounted display can be created by, for example, computer-aided design (CAD). In addition, a well-known device such as a mouse, a keyboard, a controller and the like as shown in JP 2008-541268A is generally used as a data input device for processing the created virtual stereoscopic structure.

However, even when using the existing input device such as a mouse, a keyboard and a controller, it is impossible to perform intuitive input.

US 2006/0268109 A1 and US 2008/0245955 A1 disclose that an input device of an image display system has a detection unit that detects a deformation of an elastic layer of the input device based on a displacement of markers disposed in the elastic layer.

An object of the present invention is to provide an input device and an image display system that make it possible to perform intuitive input.

### MEANS FOR SOLVING THE PROBLEMS

The above object is achieved by the present invention as defined in the appended claims.

### EFFECTS OF THE INVENTION

According to the present invention, the elastic layer is deformed when a user presses the elastic layer, for example, and then the detection portion detects this deformation. This makes it possible to detect the input to the elastic input portion. Particularly, since the user can be given a sense of touching something due to the repulsion of the elastic layer, the user can perform intuitive input.

### BRIEF DESCRIPTION OF THE DRAWINGS

FIG. 1 is a configuration diagram of an image display system according to a first embodiment of the present invention.
FIG. 2 is a diagram illustrating an example of a virtual stereoscopic structure which is displayed on an image display device shown in FIG. 1.
FIG. 3 is a partial cross-sectional perspective view of an input device shown in FIG. 1.
FIG. 4 is a diagram illustrating an example of an input method of the input device.
FIG. 5 is a cross-sectional perspective view of an elastic layer included in the input device.
FIG. 6 is a perspective view illustrating a modification example of a support member included in the input device.
FIG. 7 is a perspective view illustrating a modification example of the support member included in the input device.
FIG. 8 is a diagram illustrating an example of an input method of the input device.
FIG. 9 is a diagram illustrating an example of an input method of the input device.
FIG. 10 is a diagram illustrating an example of a use method of the image display system.
FIG. 11 is a diagram illustrating an example of a use method of the image display system.
FIG. 12 is a diagram illustrating an example of a use method of the image display system.
FIG. 13 is a diagram illustrating an example of a use method of the image display system.
FIG. 14 is a cross-sectional view illustrating a modification example of an elastic input portion included in the input device.
FIG. 15 is a cross-sectional view illustrating a modification example of the elastic input portion included in the input device.
FIG. 16 is a cross-sectional view illustrating a modification example of the elastic input portion included in the input device.
FIG. 17 is a cross-sectional view illustrating a modification example of the elastic input portion included in the input device.
FIG. 18 is a cross-sectional view illustrating a modification example of the elastic input portion included in the input device.
FIG. 19 is a cross-sectional view illustrating a modification example of the elastic input portion included in the input device.
FIG. 20 is a cross-sectional perspective view of an input device included in a second embodiment of the present invention.
FIG. 21 is a configuration diagram of an image display system according to a third embodiment of the present invention.
FIG. 22 is a perspective view of an input device shown in FIG. 21.
FIG. 23 is a side view of the input device shown in FIG. 22.
FIG. 24 is a side view illustrating a state where the input device shown in FIG. 22 is held.
FIG. 25 is a partial cross-sectional perspective view of an elastic input portion included in the input device shown in FIG. 22.
FIG. 26 is a diagram illustrating an example of a use method of the image display system.
FIG. 27 is a diagram illustrating an example of a use method of the image display system.
FIG. 28 is a diagram illustrating an example of a use method of the image display system.
FIG. 29 is a diagram illustrating an example of a use method of the image display system.
FIG. 30 is a diagram illustrating an example of a use method of the image display system.
FIG. 31 is a perspective view illustrating a modification example of the input device.
FIG. 32 is a side view illustrating a modification example of the input device.
FIG. 33 is a perspective view of an input device of a fourth embodiment of the present invention.
FIG. 34 is a perspective view illustrating a modification example of the input device shown in FIG. 33.
FIG. 35 is a perspective view illustrating a modification example of the input device shown in FIG. 33.
FIG. 36 is a perspective view of an input device of a fifth embodiment of the present invention.
FIG. 37 is a perspective view of an input device of a sixth embodiment of the present invention.
FIG. 38 is a perspective view of an input device of a seventh embodiment of the present invention.
FIG. 39 is a perspective view of an input device of an eighth embodiment of the present invention.
FIG. 40 is a side view of an input device of a ninth embodiment of the present invention.
FIG. 41 is a perspective view of an input device of a tenth embodiment of the present invention.
FIG. 42 is a cross-sectional view of an input device of an eleventh embodiment of the present invention.
FIG. 43 is a cross-sectional view of an input device of a twelfth embodiment of the present invention.
FIG. 44 is a cross-sectional view of an input device of a thirteenth embodiment of the present invention.
FIG. 45 is a cross-sectional view of an input device of a fourteenth embodiment of the present invention.
FIG. 46 is a cross-sectional view of an input device of a fifteenth embodiment of the present invention.
FIG. 47 is a cross-sectional view of an input device of a sixteenth embodiment of the present invention.
FIG. 48 is a cross-sectional view of an input device of a seventeenth embodiment of the present invention.
FIG. 49 is a cross-sectional view of an input device of an eighteenth embodiment of the present invention.
FIG. 50 is a cross-sectional view of an input device of a nineteenth embodiment of the present invention.
FIG. 51 is a cross-sectional view of the input device of the nineteenth embodiment of the present invention.
FIG. 52 is a cross-sectional view of the input device of the nineteenth embodiment of the present invention.

### DETAILED DESCRIPTION OF THE PREFERRED EMBODIMENTS

Hereinafter, an input device and an image display system of the present invention will be described in detail on the basis of preferred embodiments shown in the accompanying drawings.

### <First Embodiment

First, an image display system according to a first embodiment of the present invention will be described.

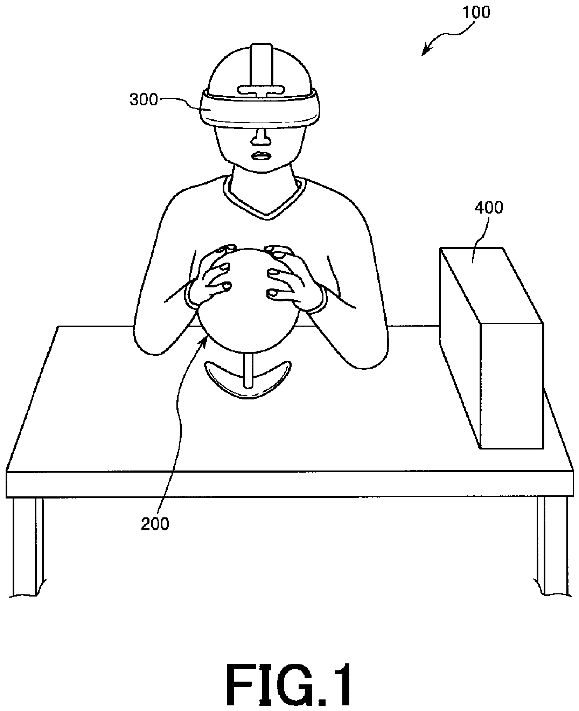

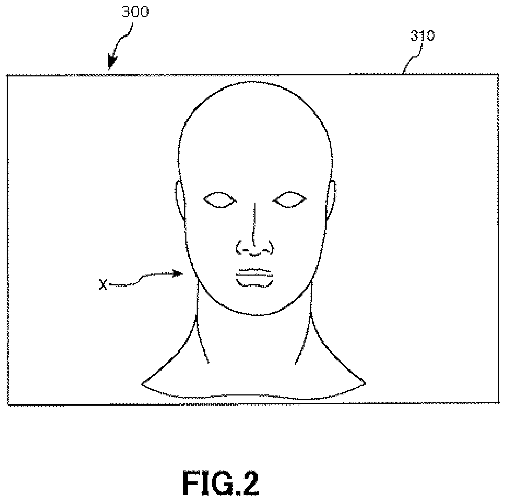

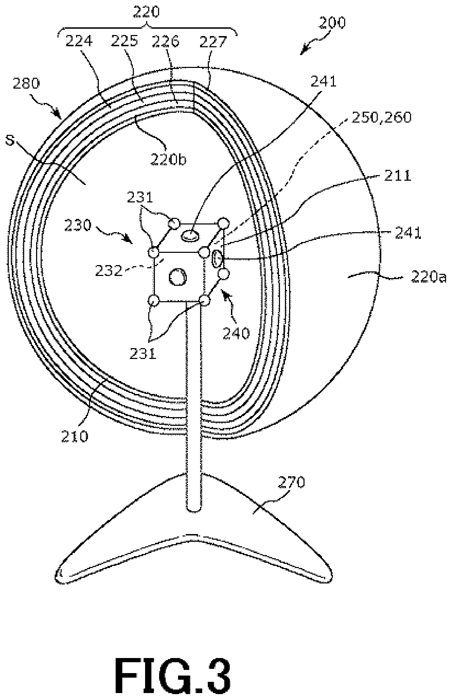

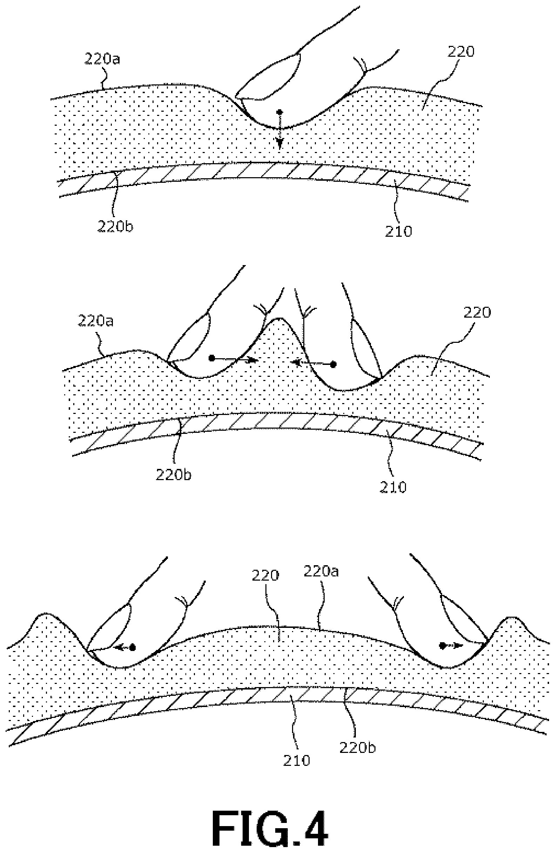

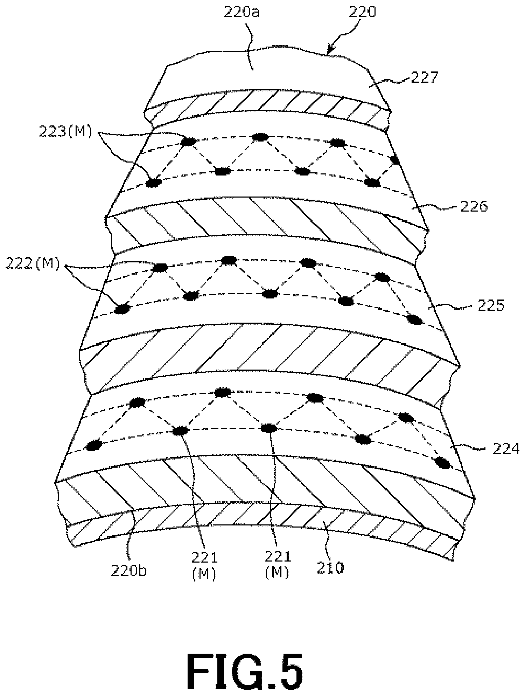

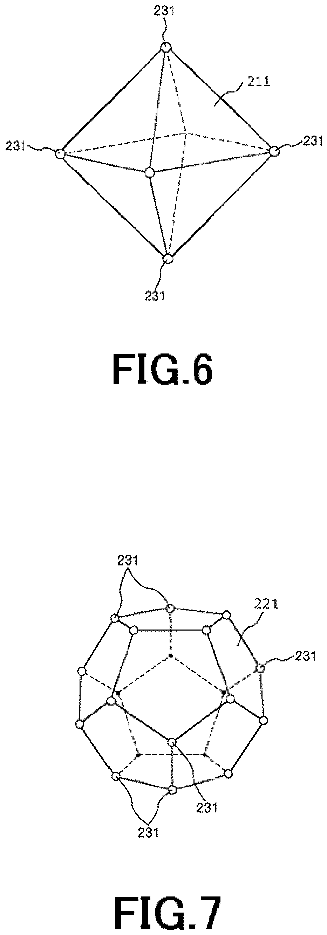

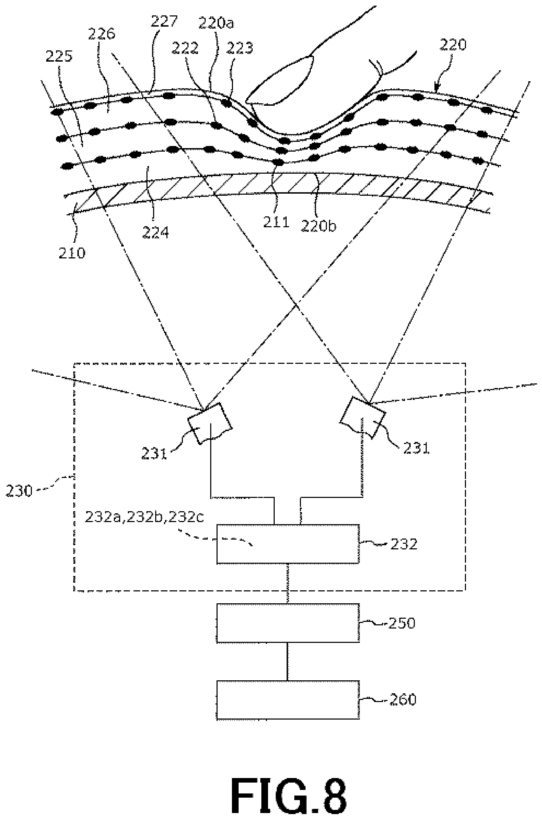

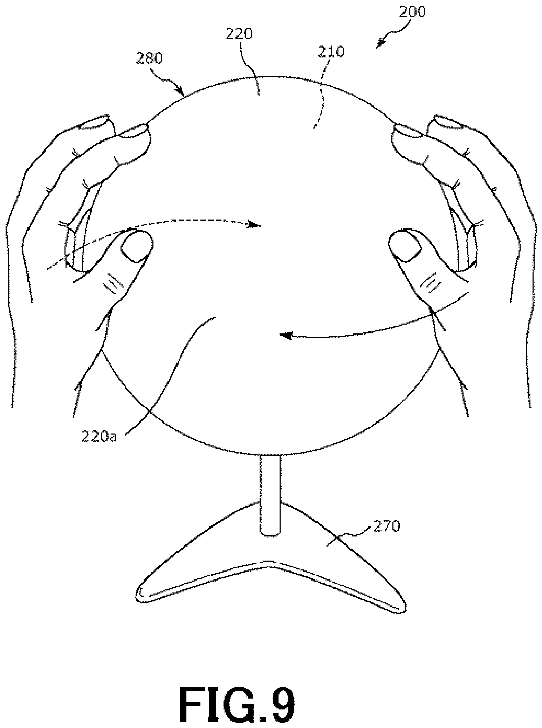

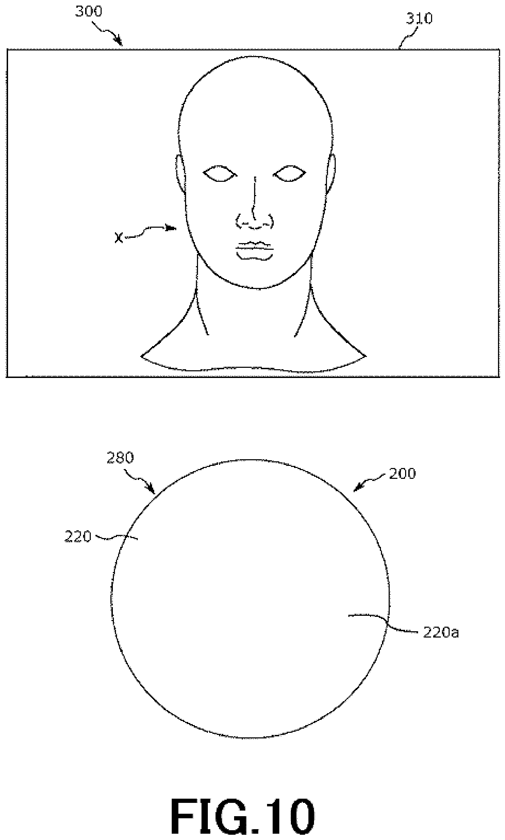

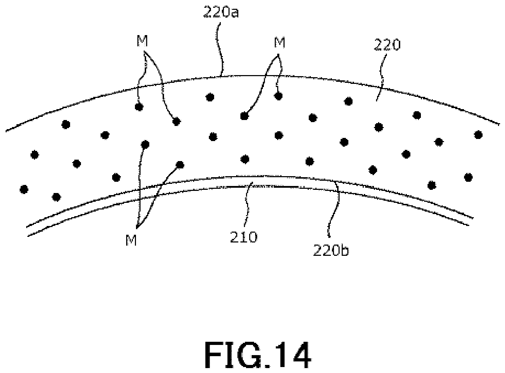

FIG. 1 is a configuration diagram of the image display system according to the first embodiment of the present invention. FIG. 2 is a diagram illustrating an example of a virtual stereoscopic structure which is displayed on the image display device shown in FIG. 1. FIG. 3 is a partial cross-sectional perspective view of an input device shown in FIG. 1. FIG. 4 is a diagram illustrating an example of an input method of the input device. FIG. 5 is a cross-sectional perspective view of an elastic layer included in the input device. Each of FIGs. 6 and 7 is a perspective view illustrating a modification example of a support member included in the input device. Each of FIGs. 8 and 9 is a diagram illustrating an example of an input method of the input device. Each of FIGs. 10 to 13 is a diagram illustrating an example of a use method of the image display system. Each of FIGs. 14 to 19 is a cross-sectional view illustrating a modification example of an elastic input portion included in the input device.

FIG. 1 shows a configuration diagram of an image display system 100. The image display system 100 includes an input device 200, an image display device 300 and a terminal 400. As described above, the image display system 100 includes the input device 200. Therefore, it is possible to receive the benefit of the effect of the input device 200 described later and to realize the image display system 100 having high reliability and high accuracy.

The image display device 300 is a head mounted display for augmented reality (AR) or virtual reality (VR) which is used in a state of being fixed to a user's head. As the image display device 300, any heretofore-known devices may be used. By using a head mounted display as the image display device 300 as described above, the user can be immersed in its operation. However, the image display device 300 is not limited to being used in a state of being mounted on a user. For example, the image display device 300 may be a tablet terminal or a display installed around a user, specifically, various monitors such as a TV monitor and a PC monitor. Further, the image display device 300 may be a projector that projects an image.

Although the terminal 400 is not particularly limited, the terminal 400 may be constituted by, for example, a personal computer, a tablet terminal, a workstation, a game machine, a smartphone or the like. The terminal 400 has a function of generating a virtual stereoscopic structure X using a system such as computer-aided design (CAD) and processing the virtual stereoscopic structure X on the basis of an input signal received from the input device 200. As shown in FIG. 2, the virtual stereoscopic structure X generated in the terminal 400 is displayed on a screen 310 of the image display device 300.

In the present embodiment, it is possible to process the virtual stereoscopic structure X on the screen 310 by operating the input device 200. In addition, it is also possible to check a state where the virtual stereoscopic structure X is being processed on the screen 310. Some or all of the functions of such a terminal 400 may be included in the input device 200 or the image display device 300 or may be included on a cloud.

Meanwhile, the application of the image display system 100 is not limited thereto. For example, it is not required to process the virtual stereoscopic structure X. In addition, a displayed item which is displayed on the screen 310 by the terminal 400 is not limited to the above-described virtual stereoscopic structure X.

As shown in FIG. 3, the input device 200 includes a substantially spherical elastic input portion 280 and a leg 270 that supports the elastic input portion 280. In addition, the elastic input portion 280 includes a housing 210 (support portion), an elastic layer 220 disposed on the outer circumferential surface of the housing 210, a marker M disposed in the elastic layer 220, a detection portion 230 which is disposed inside the housing 210 and detects the deformation of the elastic layer 220, a light source 240 that illuminates the elastic layer 220, a signal generation portion 250 that generates an input signal from a detection result of the detection portion 230 and a transmission portion 260 that transmits the input signal generated by the signal generation portion 250 to the terminal 400.

The diameter of the elastic input portion 280 is not particularly limited, but it is preferable that the diameter is, for example, equal to or greater than 20 cm and equal to or less than 40 cm. Thereby, it is possible to obtain the elastic input portion 280 having a size suitably fitting a general human hand, and thereby the operability of the input device 200 is improved. That is, it becomes easier to perform input to the elastic input portion 280.

The housing 210 supports the elastic layer 220 from the inner side. In addition, the housing 210 has a substantially spherical shape. In addition, the housing 210 is hollow and has an internal space S. The elastic layer 220 is disposed on the outer circumferential surface of the housing 210. Further, the detection portion 230, the light source 240, the signal generation portion 250 and the transmission portion 260 are contained in the internal space S. Meanwhile, the shape of the housing 210 is not particularly limited, it may be polyhedral such as hemispherical, flat spherical, regular tetrahedral, regular hexahedral and regular octahedral, tabular and the like, for example. The shape of the housing 210 can be appropriately set depending on the application of the input device 200.

In addition, the housing 210 is constituted of a hard member, specifically, a member having a hardness enough not to be substantially deformed in the extent of pressing force of a finger. In addition, the housing 210 has optical transparency. In the present embodiment, the housing 210 is constituted of a resin material and is substantially colorless and transparent. Meanwhile, the housing 210 may be omitted, for example, in a case where the elastic layer 220 can maintain a substantially constant shape even when the elastic layer 220 is not supported by the housing 210 or the like.

The elastic layer 220 has a function as an input portion which is operated by a user. For example, as shown in FIG. 4, it is possible to perform input to the input device 200 by pressing, pinching and stretching the elastic layer 220. Each of these operations is an operation which is routinely performed by a person without being particularly conscious thereof. In addition, the elastic layer 220 can also give a sense of "touch on something" to a user who has touched the elastic layer 220 due to repulsion. Therefore, a user can perform intuitive input to the elastic layer 220. In addition, a user can freely determine the strength, direction, speed and the like of the input to the elastic layer 220 with a fine touch (sense). This makes it possible to perform finer input by the user.

As shown in FIG. 5, the elastic layer 220 is a layer in which an outer circumferential surface 220a (first surface) to which external force should be inputted and an inner circumferential surface 220b (second surface) on the opposite side of the outer circumferential surface 220a are defined. Such an elastic layer 220 has elasticity and can be elastically deformed. Specifically, the elastic layer 220 has soft elasticity in a level allowing a user to deform the elastic layer 200 by pressing, extending or pinching it.

In addition, the elastic layer 220 is located on the side of the outer circumferential surface of the housing 210 and is disposed so as to cover the housing 210. Therefore, it can be said that the elastic layer 220 is supported by the housing 210 from the side of the inner circumferential surface 220b. In addition, the elastic layer 220 is formed in a shape following the outward shape of the housing 210, that is, in a substantially spherical shape. In this manner, the elastic layer 220 is formed in a spherical shape, that is, in a shape having a portion curved in a convex shape. Thereby, it becomes easier to put both hands on the elastic layer 220 (see FIG. 9) and it is possible to more naturally perform input to the elastic layer 220. In addition, since it becomes easier to extend the elastic layer 220 and to pinch the elastic layer 220 as well, it is possible to perform finer input to the elastic layer 220. However, the shape of the elastic layer 220 is not particularly limited and it may be polyhedral such as hemispherical, flat circular, regular tetrahedral, regular hexahedral, regular and octahedral, tabular and the like, in addition to spherical.

A marker M which is displaced due to the deformation of the elastic layer 220 is disposed in such an elastic layer 220. This marker M is a detection target capable of being detected by the detection portion 230. As shown in FIG. 5, the marker M includes first markers 221, second markers 222 and third markers 223 which are disposed so as to be shifted in the thickness direction of the elastic layer 220 with each other. In addition, each of the first markers 221, the second markers 222 and the third markers 223 is formed in a dot shape, that is, in a point shape. In addition, the first markers 221, the second markers 222 and the third markers 223 are different from each other in distance from the housing 210. In addition, each of the first markers 221, the second markers 222 and the third markers 223 is displaced in association with the deformation of the elastic layer 220. Therefore, it is possible to detect the deformation of the elastic layer 220 on the basis of the displacement of the first markers 221, the second markers 222 and the third markers 223 and to further detect input to the elastic layer 220 from the deformation of the elastic layer 220.

As shown in FIG. 5, the elastic layer 220 includes a first elastic layer 224 (first marker disposed layer) which is disposed on the outer circumference of the housing 210 and has the first markers 221, a second elastic layer 225 (second marker disposed layer) which is disposed on the first elastic layer 224 and has the second markers 222, a third elastic layer 226 (third marker disposed layer) which is disposed on the second elastic layer 225 and has the third markers 223 and a protective layer 227 disposed on the third elastic layer 226.

The first elastic layer 224 has optical transparency and elasticity (restoring force). The plurality of first markers 221 are disposed on the surface of the first elastic layer 224 so as to be separated from each other. In addition, the second elastic layer 225 has optical transparency and elasticity (restoring force). The plurality of second markers 222 are disposed on the surface of the second elastic layer 225 so as to be separated from each other. In addition, the third elastic layer 226 has optical transparency and elasticity (restoring force). The plurality of third markers 223 are disposed on the surface of the third elastic layer 226 so as to be separated from each other.

In the present embodiment, each of the first, second and third elastic layers 224, 225 and 226 is substantially colorless and transparent. However, at least one of the first, second and third elastic layers 224, 225 and 226 may be, for example, colored and transparent as long as the first, second and third elastic layers 224, 225 and 226 have optical transparency.

Meanwhile, constituent materials for the first, second and third elastic layers 224, 225 and 226 are not particularly limited. Examples of the constituent materials include various thermoplastic elastomers such as a polyurethane-based elastomer, a styrene-based thermoplastic elastomer, an olefin-based thermoplastic elastomer, a vinyl chloride-based thermoplastic elastomer, an ester-based thermoplastic elastomer, an amide-based thermoplastic elastomer, a silicone-based thermoplastic elastomer and a fluorine-based thermoplastic elastomer; various rubber materials such as acrylic-based rubber, silicone-based rubber, butadiene-based rubber and styrene-based rubber; and the like. These materials can be used singularly or in a combination of two or more types of these materials for forming the elastic layers 224, 225 and 226 (for example, a laminate of two or more layers constituted of different materials can be used as any one of the elastic layers 224, 225 and 226).

The thickness of each of the first, second and third elastic layers 224, 225 and 226 is not particularly limited, but may be preferably equal to or greater than 1 mm and equal to or less than 20 mm, and more preferably equal to or greater than 5 mm and equal to or less than 10 mm, for example. Thereby, since each of the first, second and third elastic layers 224, 225 and 226 is sufficiently deformed at the time of input, it is possible to sufficiently displace each of the first, second and third markers 221, 222 and 223. In addition, the amount of deformation of the elastic layer 220 at the time of input becomes adequate. Therefore, it is possible to improve an operational feeling and to more accurately detect the deformation of the elastic layer 220.

In addition, although the elastic moduli (Young's moduli) of the first, second and third elastic layers 224, 225 and 226 are not particularly limited, the elastic moduli may be equal to each other or different from each other. In a case where the elastic moduli of the first, second and third elastic layers 224, 225 and 226 are different from each other, when the Young's modulus of the first elastic layer 224 is set to E1, the Young's modulus of the second elastic layer 225 is set to E2 and the Young's modulus of the third elastic layer 226 is set to E3, the elastic layers 224, 225 and 226 may be designed so as to satisfy the relation of E1<E2<E3 or may be reversely designed so as to satisfy to the relation of E1>E2>E3, for example.

For example, in a case where the elastic layers 224, 225 and 226 are designed so as to satisfy the relation of EI>E2>E3, it is possible to realize designs in which only the third elastic layer 226 which is softest is substantially deformed at the time of input of weak force F1, only the second and third elastic layers 225 and 226 are substantially deformed at the time of input of force F2 larger than the force F1, and the first, second and third elastic layers 224, 225 and 226 are deformed at the time of input of force F3 larger than the force F2. In this case, it is possible to roughly detect the strength of input by detecting that the marker M on which elastic layer is displaced.

The positions of the plurality of first markers 221 are not particularly limited to specific positions. The plurality of first markers 221 may be disposed regularly or may be disposed irregularly. In the present embodiment, three markers adjacent to each other are uniformly disposed on the surface of the first elastic layer 224 so as to be located at vertices of an equilateral triangle. The same discussion can be applied to the second markers 222 and the third markers 223. Thereby, it is possible to regularly array the plurality of first markers 221 and dispose the first markers 221 without deficiency and excess throughout the entire elastic layer 220. Therefore, the deformation of each portion of the elastic layer 220 can be more accurately detected by the detection portion 230.

However, the respective positions of the first, second and third markers 221, 222 and 223 are not limited to the above-described positions. Hereinafter, modification examples of the positions of the first, second and third markers 221, 222 and 223 will be described by taking an example of the first markers 221. However, the same discussion can be applied to the second and third markers 222 and 223.

For example, when three axes orthogonal to each other are set to an X-axis, a Y-axis and a Z-axis, a plurality of first line segments which form a ring shape, extend within a YZ plane and are disposed so as to be separated from each other at regular intervals in an X-axis direction and a plurality of second line segments which form a ring shape, extend an XZ plane and are disposed so as to be separated from each other at regular intervals in a Y-axis direction may be defined on the surface of the first elastic layer 224. The first markers 221 may be disposed at the intersection points between the first line segments and the second line segments.

In addition, for example, in addition to the first line segments and the second line segments described above, a plurality of third line segments which form a ring shape, extend within an XY plane and are disposed so as to be separated from each other at regular intervals in a Z-axis direction may be defined on the surface of the first elastic layer 224. The first markers 221 may be disposed on the first, second and third line segments at regular intervals.

In addition, for example, a plurality of surfaces are defined by rotating the YZ plane intersecting the center of the housing 210 at equiangular intervals around the Y-axis passing through the center of the housing 210 and a plurality of first line segments which form a ring shape formed at the intersection portion between each surface and the surface of the first elastic layer 224 are defined. Further, a plurality of surfaces are defined by rotating the XY plane intersecting the center of the housing 210 at equiangular intervals around the X-axis passing through the center of the housing 210 and a plurality of second line segments which form a ring shape formed at the intersection portion between each surface and the surface of the first elastic layer 224 are defined. The first markers 221 may be disposed at the intersection points between the first line segments and the second line segments.

In addition, the arrangement densities of the first, second and third markers 221,222 and 223 may be different from each other depending on input accuracy and detection accuracy of the detection portion 230 to be required, specifically, a resolution of a camera 231 described later, the processing speed of the signal generation portion 250 and the like. However, the arrangement densities are preferably higher as long as the densities can be recognized by the resolution of the camera 231, for example. This makes it possible to further increase the numbers of first, second and third markers 221, 222 and 223, thereby the detection portion 230 can detect the deformation of the elastic layer 220 more accurately and in more detail. Therefore, the signal generation portion 250 can generate a more accurate input signal.

In addition, the first, second and third markers 221, 222 and 223 are different from each other in at least one of shape and hue, and thus the first, second and third markers 221, 222 and 223 can be distinctly recognized by the detection portion 230. In the present embodiment, the first, second and third markers 221, 222 and 223 are different from each other in hue. For example, the first markers 221 are red, the second markers 222 are green and the third markers 223 are blue. Meanwhile, in a case where not the hues but the shapes of the first, second and third markers 221, 222 and 223 are different from each other, each of the first markers 221 can be formed in a circular shape, each of the second markers 222 can be formed in a triangular shape and each of the third markers 223 can be formed in a quadrilateral shape, for example. Naturally, the hues and shapes thereof may all be made different from each other. Further, the first, second and third markers 221, 222 and 223 may be recognized by the detection portion 230 using methods other than to make the hues and shapes thereof different from each other.

In addition, it is preferable that the first, second and third markers 221,222 and 223 are disposed so as not to overlap each other when seen from the camera 231 of the detection portion 230 in a natural state. That is, it is preferable that, on an image captured by the camera 231, the second markers 222 are disposed so as not to be hidden by the first markers 221 present in front thereof and the third markers 223 are disposed so as not to be hidden by the first and second markers 221 and 222 present in front thereof. Thereby, the displacement of the first, second and third markers 221, 222, and 223 at the time of input to the elastic layer 220 can be more accurately captured by the camera 231. Therefore, the signal generation portion 250 can generate a more accurate input signal. Meanwhile, the term "natural state" as used therein refers to, for example, a stationary state and a state where a user does not touch the elastic layer 220 (in other words, a state where external force other than gravity is not applied substantially).

Meanwhile, each of the configurations of the first, second and third markers 221, 222 and 223 is not particularly limited as long as each of them can be detected by the detection portion 230. For example, the first, second and third markers 221, 222 and 223 are not limited to being dot-shaped, that is, point-shaped, and may be line-shaped, surface-shaped, stereoscopic or the like. In addition, for example, the first, second and third markers 221, 222 and 223 may be attached to the surfaces of the first, second and third elastic layers 224, 225 and 226, respectively, or may be printed on the surfaces of the first, second and third elastic layers 224, 225 and 226 using ink or the like. In addition, for example, it is possible to take a configuration in which the marker M is disposed on a circular sheet body to be coated on the elastic layer 220 so as to cover the elastic layer 220. In addition, for example, the first, second and third markers 221, 222 and 223 may be provided inside the first, second and third elastic layers 224, 225 and 226, respectively.

The protective layer 227 has a function of protecting the third elastic layer 226 as a main function. In addition, the protective layer 227 has optical transparency and elasticity as is the case with the first, second and third elastic layers 224, 225 and 226. In the present embodiment, the protective layer 227 is colorless and transparent. However, the protective layer 227 may be colored and transparent. The constituent material for such a protective layer 227 is not particularly limited. Examples of the constituent material include the same materials as the above-described constituent materials for the first, second and third elastic layers 224, 225 and 226.

Hereinbefore, the elastic layer 220 has been described. Such an elastic layer 220 can be formed (manufactured) as follows, for example. First, the first elastic layer 224 is formed by applying a material onto the outer circumferential surface of the housing 210 and then the plurality of first markers 221 are disposed on the surface of the first elastic layer 224. Next, the second elastic layer 225 is formed by applying a material onto the surface of the first elastic layer 224 and then the plurality of second markers 222 are disposed on the surface of the second elastic layer 225. Next, the third elastic layer 226 is formed by applying a material onto the surface of the second elastic layer 225 and then the plurality of third markers 223 are disposed on the surface of the third elastic layer 226. Finally, the protective layer 227 is formed by applying a material onto the surface of the third elastic layer 226. Through these steps, the elastic layer 220 can be formed. However, a method of forming the elastic layer 220 is not limited thereto.

The detection portion 230 three-dimensionally detects the deformation of the elastic layer 220 using a stereo photographic method. By using the stereo photographic method as described above, it is possible to detect the deformation of the elastic layer 220 in a relatively simple way and with a high degree of accuracy.

As shown in FIG. 3, the detection portion 230 includes a plurality of cameras 231 as a photographing portion disposed within the internal space S. Here, a support member 211 fixed with respect to the housing 210 is disposed at the central portion of the internal space S and each camera 231 is supported by this support member 211. Each camera 231 is radially disposed so as to be directed toward the side of the elastic layer 220 and can capture an image of the elastic layer 220. In addition, each portion of the elastic layer 220 is configured such that the image thereof can be captured by at least two cameras 231. Thereby, three-dimensional image recognition, that is, stereo image recognition can be performed on each portion of the elastic layer 220.

Each camera 231 is not particularly limited. A CCD camera, a CMOS camera or the like can be used as the camera 231, for example. In addition, in the present embodiment, although the three-dimensional image recognition is performed on each portion of the elastic layer 220 using two cameras 231, it may be possible to perform the three-dimensional image recognition on each portion of the elastic layer 220 using a plurality of images obtained in a time-division manner with one camera 231 using lenses having a plurality of optical axes, for example. According to such a configuration, it is possible to achieve a size reduction and a cost reduction of the photographing portion.

In the present embodiment, as shown in FIG. 3, the support member 211 is formed in a regular hexahedral shape and the eight cameras 231 are disposed so as to be located at the respective vertices of this regular hexahedral shape. However, the positions of the plurality of cameras 231 and the directions of the optical axes of the plurality of cameras 231 are not particularly limited as long as the image of each portion of the elastic layer 220 can be captured by at least two of the cameras 231. Although depending on the angle of view of each camera 231 or the like, the support member 211 may be formed in a regular octahedral shape and the plurality of cameras 231 may be disposed so as to be located at the respective vertices of this regular octahedron as shown in FIG. 6, for example. Further, the support member 211 may be formed in a regular dodecahedral shape and the plurality of cameras 231 may be disposed so as to be located at the respective vertices of this regular dodecahedral shape as shown in FIG. 7. Meanwhile, the wording "each portion of the elastic layer 220" may mean the entirety of the elastic layer 220 or may also mean some of regions selected in the elastic layer 220.

In addition, as shown in FIG. 8, the detection portion 230 includes a processing unit 232 that performs the three-dimensional image recognition for the elastic layer 220 on the basis of image information from each camera 231. The processing unit 232 includes, for example, a CPU 232a that controls each portion such as each camera 231, a memory 232b, a storage unit 232c such as a flash memory and the like. The processing unit 232 is configured to be capable of executing a predetermined program (code). Meanwhile, the program may be stored in, for example, a recording medium or may be downloaded from an external server.

Here, as described above, the input to the input device 200 is performed by pressing, pinching, stretching or extending the elastic layer 220. The elastic layer 220 is deformed in accordance with this input and each of the first, second and third markers 221, 222 and 223 is displaced in association with the deformation. Specifically, for example, as shown in FIG. 8, in a case where a certain portion of the elastic layer 220 is pressed and deformed, each of the first, second and third markers 221, 222 and 223 located immediately below the finger and in the vicinity of this portion is displaced in accordance with received force. The processing unit 232 detects such displacement of the first, second and third markers 221, 222 and 223 through the three-dimensional image recognition to obtain the input information (contact input information) including an input position, an input direction, an input strength, an input speed, an input acceleration or the like on the basis of the detection results.

As described above, the first, second and third markers 221, 222 and 223 are disposed in the elastic layer 220, and thus the detection portion 230 can more accurately detect the deformation of the elastic layer 220 on the basis of the displacement of the first, second and third markers 221, 222 and 223. Particularly, in the present embodiment, the first, second and third markers 221,222 and 223 are disposed so as to be shifted in the thickness direction of the elastic layer 220 with each other. Therefore, the detection portion 230 can detect the deformation at different positions in the thickness direction of the elastic layer 220 and can detect the deformation of the elastic layer 220 in more detail.

Here, an example of a method of obtaining the input information using the processing unit 232 will be simply described. The three-dimensional coordinate of each camera 231 is stored in advance in the storage unit 232c of the processing unit 232. The processing unit 232 obtains same-time images using two cameras 231 for detecting the displacement of a predetermined marker M and obtains two-dimensional coordinates of the predetermined marker M in the both same-time images. Next, the processing unit 232 obtains the three-dimensional coordinate of the predetermined marker M on the basis of a shift between the two-dimensional coordinates of the predetermined marker M in the both same-time images and the three-dimensional coordinate of each camera 231 to stores the obtained three-dimensional coordinate in the storage unit 232c. The processing unit 232 continuously performs this work for each frame. The processing unit 232 compares the three-dimensional coordinate of the predetermined marker M obtained at the previous time with the three-dimensional coordinate of the predetermined marker M obtained at this newly time. As a result, the processing unit 232 can detect the displacement of a predetermined marker M generated in the interval. The processing unit 232 performs such work on all the markers M, and thereby the processing unit 232 can obtain the input information. Meanwhile, although the frame rate of each camera 231 is not particularly limited, it can be set to 15 frames/second, 30 frames/second, 60 frames/second and the like, for example.

Although the method of obtaining the input information using the processing unit 232 has been explained in the above description, the method of obtaining the input information is not limited thereto. For example, in a case where the above-described work is performed on all of the markers M, the amount of processing increases. In this case, it is concerned that the increased amount of processing cannot be processed by the processing unit 232 or the like depending on the performance of the processing unit 232 or the like. In addition, depending on application, there is a case where it is only required to obtain rough input information. Therefore, in such a case, the processing unit 232 may perform the above-described work on only some of the markers M selected in advance, for example.

In addition, the processing unit 232 may obtain the above-described input information by storing an image of each portion of the elastic layer 220 in the natural state as a reference image and comparing this reference image with the images obtained as described above in real time to thereby specify the displacement of the first, second and third markers 221, 222 and 223, for example.

As shown in FIG. 8, the signal generation portion 250 receives the input information (contact input information) obtained by the detection portion 230 and generates the input signal (contact input signal) on the basis of the received input information. Such a signal generation portion 250 may be included in the detection portion 230.

Meanwhile, although the processing unit 232 and the signal generation portion 250 are disposed inside the support member 211 in the present embodiment, the positions thereof are not particularly limited. For example, these components 232 and 250 may be disposed inside the leg 270. In addition, the processing unit 232 and the signal generation portion 250 may be included in the terminal 400 or the image display device 300 rather than the input device 200 or may be provided on a cloud environment, for example.

The light source 240 can illuminate the elastic layer 220 from the inner side of the housing 210. As shown in FIG. 3, the light source 240 includes a plurality of light-emitting portions 241 disposed within the internal space S. Each of the light-emitting portions 241 is not particularly limited. For example, an LED can be used as each of the light-emitting portions 241. In addition, each of the light-emitting portions 241 may emit visible light, NIR light (near-infrared light) or ultraviolet light. Each camera 231 may be configured to correspond to visible light in a case where an element that emits the visible light is used as the light-emitting portion 241. Further, each camera 231 may be configured to correspond to NIR light in a case where an element that emits the NIR light is used as the light-emitting portion 241. Furthermore, each camera 231 may be configured to correspond to ultraviolet light in a case where an element that emits the ultraviolet light is used as the light-emitting portion 241. Particularly, since the NIR light or the ultraviolet light is invisible to human eyes, a user does not feel dazzling even in a case where the light leaks to the outside through the elastic layer 220. In addition, particularly, in a case where each camera 231 emits the ultraviolet light, the marker M may be a phosphor. Thereby, an image of the marker M can be captured more vividly by the cameras 231.

In addition, each of the plurality of light-emitting portions 241 is supported by the support member 211 and the substantially entire area of the elastic layer 220 is illuminated with light emitted from the plurality of light-emitting portions 241. Since such a light source 240 is used in the input device 200, the detection portion 230 can perform the image recognition for the elastic layer 220 with a higher resolution. Therefore, the detection portion 230 can obtain the higher-accuracy input information. Meanwhile, since the support member 211 is formed in the regular hexahedral shape in the present embodiment, the plurality of light-emitting portions 241 are disposed so as to be located at the central portion of each surface of this regular hexahedral shape. However, the positions of the plurality of light-emitting portions 241 are not particularly limited. For example, in a case where the support member 211 is formed in the regular octahedral shape as described above, the light-emitting portions 241 may be disposed so as to be located at the central portion of each surface of this regular octahedral shape. In a case where the support member 211 is formed in the regular dodecahedral shape, the light-emitting portions 241 may be disposed so as to be located at the central portion of each surface of this regular dodecahedral shape.

Meanwhile, the light source 240 may be omitted in a case where the elastic layer 220 is kept sufficiently bright by light from the outside world in a level for enabling the image recognition, for example. In addition, a luminance sensor may be disposed within the internal space S and the driving of each light-emitting portion 241 may be controlled on the basis of the brightness in the internal space S detected by this luminance sensor. Thereby, it is possible to maintain the brightness in the internal space S to be substantially constant and to more stably perform the image recognition for the elastic layer 220 (marker M) using the detection portion 230, for example.

As shown in FIG. 8, the transmission portion 260 receives the input signal generated by the signal generation portion 250 and transmits the received input signal to the terminal 400. The transmission method of the transmission portion 260 is not particularly limited. For example, it is possible to use a wired manner or a wireless manner (wireless LAN such as Bluetooth (Registered Trademark) or Wi-Fi). Meanwhile, although the transmission portion 260 is disposed inside the support member 211 in the present embodiment, the position of the transmission portion 260 is not particularly limited. For example, the transmission portion 260 may be disposed within the leg 270. In addition, in a case where the terminal 400 includes the processing unit 232 and the signal generation portion 250 as described above or the like, the transmission portion 260 may transmit the image information from each camera 231 to the terminal 400.

Meanwhile, the first, second and third elastic layers 224, 225 and 226 and the protective layer 227 are colorless and transparent in the present embodiment as described above. Therefore, each camera 231 can capture an image of the outside world of the elastic layer 220 through the elastic layer 220. Therefore, it is possible to capture the motion of both hands of a user by using each camera 231. This makes it possible to perform input even if the user does not touch the elastic layer 220 or it is possible to perform input even if the user softly touches the elastic layer 220 in a level that the first, second and third markers 221, 222 and 223 are not displaced.

Specifically, for example, in a case where both hands are disposed above the elastic layer 220 in a non-contact manner so as to cover around the housing 210 and both hands are moved so as to rotate the housing 210 as shown in FIG. 9, the processing unit 232 detects the motion of both hands on the basis of the images from the cameras 231 and obtains the input information (non-contact input information) based on this motion. The input information obtained in this manner is also transmitted to the signal generation portion 250 and the signal generation portion 250 generates the input signal (non-contact input signal) on the basis of the received input information. According to such a configuration, non-contact type input can be performed in addition to the above-described contact type input, and thereby the operability and convenience of the input device 200 are further improved.

Meanwhile, in a case where portions of the first, second and third markers 221, 222 and 223 overlapped by the hands (fingers) are not displaced, it is preferable that the detection portion 230 obtains only the non-contact input information. In a case where the portions of the first, second and third markers 221, 222 and 223 overlapped by the hands (fingers) are displaced, it is preferable that the detection portion 230 obtains only the contact input information. In addition, in a case where the portions of the first, second and third markers 221, 222 and 223 overlapped by the hands (fingers) are not displaced, it is preferable that the signal generation portion 250 generates only the non-contact input signal. In a case where the first, second and third markers 221, 222 and 223 are displaced, it is preferable that the signal generation portion 250 generates only the contact input information. With this configuration, it is possible to reduce the generation of an erroneous input signal.

In addition, the input device 200 may be configured to be capable of simultaneously performing the contact type input and the non-contact type input. That is, the input device 200 may be configured such that the contact type input can be performed with one hand of the user whereas the non-contact type input can be performed with the other hand of the user, for example. In this case, it is preferable to perform the contact type input and the non-contact type input respectively corresponding to different regions of the elastic layer 220. This allows the detection portion 230 to relatively easier obtain the contact input information and the non-contact input information.

Meanwhile, the non-contact type input may be not essential and may not be performed. In this case, the protective layer 227 is not required to have the optical transparency, and thus the protective layer 227 may not have the optical transparency. In a case where the protective layer 227 does not have the optical transparency, the light emitted from the light source 240 does not leak out of the elastic layer 220. Therefore, for example, even in a case where the amount of the light emitted from the light source 240 is large, a user does not feel dazzling.

As shown in FIG. 3, the leg 270 is coupled to the housing 210 and is configured to allow the housing 210 to be disposed on a floor or a desk with a stable posture. Meanwhile, a configuration of the leg 270 is not particularly limited as long as the housing 210 can be supported with a stable posture. For example, the leg 270 may be configured to be capable of adjusting its height and may be configured to be attachable and detachable to and from the housing 210. In addition, the leg 270 may be configured to be provided with a display portion including a display capable of displaying various information. The leg 270 may be configured to be provided with an input portion such as a button. The leg 270 may be configured to have various components such as a built-in power supply battery of the input device 200. Particularly, in the case where the input device 200 has the power supply battery, the input device 200 with wireless communication can be realized and this leads to an improvement in convenience of the input device 200.

The input device 200 has been explained in the above description. Such an input device 200 may have various additional components in addition to the above-described components, as necessary. Examples of such components include a proximity sensor, an orientation sensor, a magnetic field sensor, a luminance sensor, an atmospheric pressure sensor, a temperature sensor and the like. For example, in a case where the input device 200 has the proximity sensor, the proximity sensor can be used as a power-supply switch of the input device 200 and the input device 200 can be configured to be driven when a user puts his or her hand over the input device 200. In addition, in a case where the input device has the orientation sensor, the magnetic field sensor, the luminance sensor, the atmospheric pressure sensor and the temperature sensor, it is possible to reflect the orientation, the magnetic field, the brightness, the atmospheric pressure and temperature of the real world into a virtual three-dimensional space in the screen 310. Therefore, it is possible to form the virtual three-dimensional space closer to the real world in the screen 310.

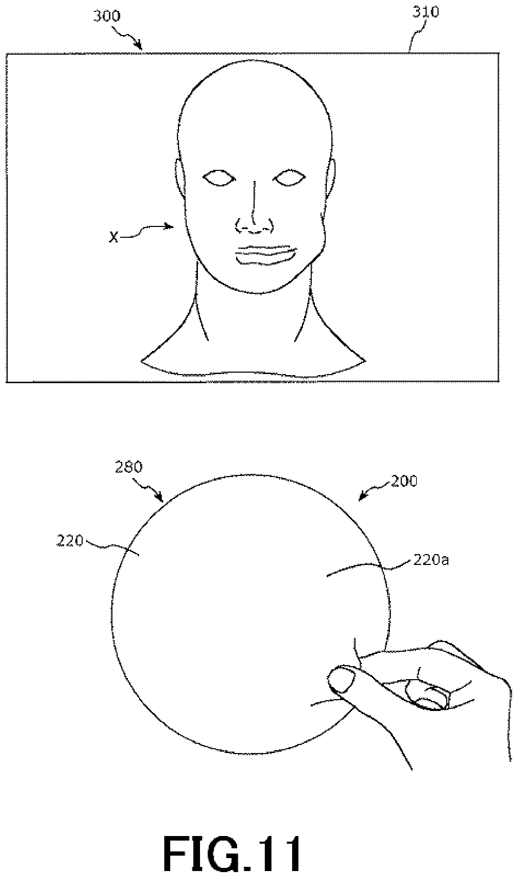

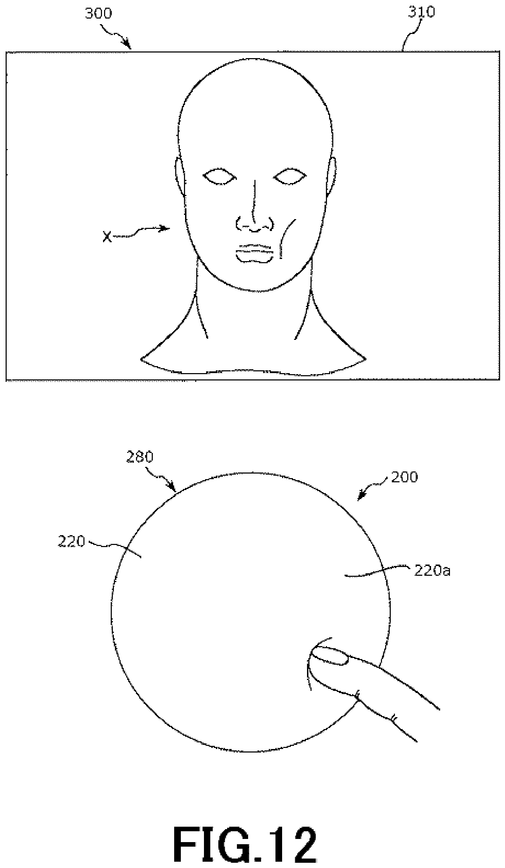

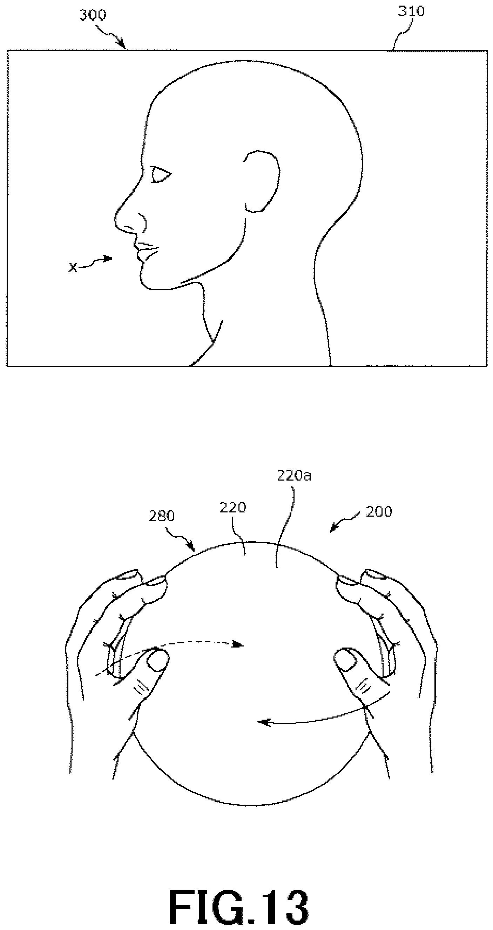

Next, an example of a specific use method of the image display system 100 will be described. For example, a virtual stereoscopic structure X of the human head as shown in FIG. 10 is displayed on the screen 310 of the image display device 300 worn by a user. As shown in FIG. 11, the user can consider the elastic layer 220 as the human head and extend a portion of the elastic layer 220 which is equivalent to the cheek of the human head to extend the cheek of the virtual stereoscopic structure X. Similarly, as shown in FIG. 12, the cheek of the virtual stereoscopic structure X can be pressed by pressing the portion of the elastic layer 220 which is equivalent to the cheek of the human head. In addition, as shown in FIG. 13, the virtual stereoscopic structure X can be rotated by performing the non-contact type input. As a result, the virtual stereoscopic structure X can be set to be directed toward an any desired direction. In this manner, according to the input device 200, it is possible to perform intuitive input. In addition, according to the input device 200, it is possible to give a user a sense of touching something due to the repulsion of the elastic layer 220. Therefore, according to the input device 200, it is possible to perform intuitive and delicate input.

Meanwhile, the use method of the image display system 100 is not particularly limited. The image display system 100 can be used for design of industrial products such as various games, household electric appliances, automobiles and airplanes; design simulations and the like, for example. In addition, although the example in which the virtual stereoscopic structure X is three-dimensionally processed has been explained in the above-described use method, the stereoscopic structure X may be further processed in a four-dimensional method in which a time axis is added.

The input device 200 of the present embodiment has been explained in the above description. As described above, the input device 200 is provided with the elastic input portion 280 including the elastic layer 220 in which the outer circumferential surface 220a (first surface) to which external force should be inputted and the inner circumferential surface 220b (second surface) on the opposite side of the outer circumferential surface 220a are defined, the marker M which is disposed in the elastic layer 220 and displaced in association with the deformation of the elastic layer 220 and the detection portion 230 which is located on the side of the inner circumferential surface 220b of the elastic layer 220 and detects the deformation of the elastic layer 220 on the basis of the displacement of the marker M. Therefore, when the elastic layer 220 is deformed by a user pressing, extending or pinching with respect to the elastic layer 220, the detection portion 230 detects this deformation. This allows the elastic input portion 280 to detect the input to the elastic input portion 280. The operations of pressing, extending, pinching and the like using fingers are human daily operations. Therefore, according to the input device 200 capable of using such operations as input, it is possible to realize finer and more intuitive input. Further, it is possible to give a user a sense of touching something due to the repulsion of the elastic layer 220, and thus the user can perform more intuitive input.

In addition, as described above, the marker M includes the first markers 221 and the second markers 222 which are disposed so as to be shifted in the thickness direction of the elastic layer 220 with each other in the input device 200. Therefore, the detection portion 230 can detect the deformation of each portion of the elastic layer 220 (for example, each portion of the elastic layer 220 in the vicinity of the outer surface, the vicinity of the center and the vicinity of the inner surface) in the thickness direction of the elastic layer 220. Therefore, the deformation of the elastic layer 220 can be more accurately detected by the detection portion 230. Particularly, since the third markers 223 are included in addition to the first and second markers 221 and 222 in the present embodiment, the above-described effect becomes more remarkable.

In addition, as described above, the first markers 221 and second markers 222 are different from each other in at least one of the shape and hue in the input device 200. Thus, the detection portion 230 can easily identify the first markers 221 and the second markers 222. Therefore, the displacement of each of the first markers 221 and the second markers 222 can be more accurately detected by the detection portion 230.

In addition, as described above, the detection portion 230 includes the cameras 231 as the photographing portion for capturing the image of the elastic layer 220 and detects the deformation of the elastic layer 220 on the basis of the image data of the elastic layer 220 captured by the cameras 231 in the input device 200. Thereby, it is possible to detect the deformation of the elastic layer 220 with a relatively simple configuration. Particularly, the detection portion 230 detects the deformation of the elastic layer 220 using a stereo photographic method in the present embodiment. Therefore, it is possible to detect the deformation of the elastic layer 220 in a relatively simple way and with a high degree of accuracy.

In addition, as described above, the outer circumferential surface 220a (first surface) of the elastic layer 220 has the convex shape protruding toward the opposite side of the inner circumferential surface 220b (second surface) in the input device 200. Therefore, it becomes easier to put both hands on the elastic layer 220 (see FIG. 9) and it is possible to more naturally perform input to the elastic layer 220. In addition, since it becomes easier to extend the elastic layer 220 and to pinch the elastic layer 220 as well, it is possible to perform more finer input.

In addition, as described above, the input device 200 includes the housing 210 as the support portion that supports the elastic layer 220 from the side of the inner circumferential surface 220b (second surface). Thereby, the shape of the elastic layer 220 stabilizes and an unintended deformation of the elastic layer 220, that is, a deformation of the elastic layer 220 due to external force other than the input is suppressed. Therefore, it is possible to perform input to the elastic input portion 280 with a higher degree of accuracy.

Meanwhile, the configuration of the input device 200 is not limited the above-described configuration. For example, although the elastic layer 220 includes the first elastic layer 224, the second elastic layer 225 and the third elastic layer 226 in the present embodiment, the elastic layer 220 is not particularly limited as long as it includes the first elastic layer 224. For example, at least one of the second elastic layer 225 and the third elastic layer 226 may be omitted.

In addition, the elastic layer 220 may be configured such that its elastic force is variable, for example. Thereby, it is possible to change the elastic force of the elastic layer 220 in accordance with the hardness of the virtual stereoscopic structure X displayed on the screen 310 and to more intuitively perform input with a small sense of discomfort. The configuration of the elastic layer 220 in this case is not particularly limited. Examples of the configuration of the elastic layer 220 in this case include a configuration in which the elastic layer 220 includes a first covering portion which covers the housing 210 and has a first airtight space between the covering portion and the housing 210, first markers 221 disposed on the surface of the first covering portion, a second covering portion which covers the first covering portion and has a second airtight space between the second covering portion and the first covering portion, second markers 222 disposed on the surface of the second covering portion, a third covering portion which covers the second covering portion and has a third airtight space between the third covering portion and the second covering portion, third markers 223 disposed on the surface of the third covering portion and a protective covering portion which covers the third covering portion and has a fourth airtight space between the protective covering portion and the third covering portion. In this configuration, gas such as air or rare gas is supplied to each of the first airtight space, the second airtight space, the third airtight space and the fourth airtight space by a pump or the like. This makes it possible to adjust the pressure in each of these spaces. In addition, in this case, it is preferable that the unintended displacement of the first covered portion with respect to the housing 210 is suppressed by connecting the housing 210 and the first covered portion with each other at some portions with a connecting member such as a string having no substantial extension and disposed within the first airtight space. The same discussion can be applied to the second covering portion, the third covering portion and the protective covering portion.

In addition, in the present embodiment, the marker M includes the first, second and third markers 221,222 and 223 which are different from each other in distance from the housing 210. However, at least one of the first, second and third markers 221, 222 and 223 may be omitted, for example.

In addition, the first markers 221 are disposed on the first elastic layer 224, the second markers 222 are disposed on the second elastic layer 225 and the third markers 223 are disposed on the third elastic layer 226 in the present embodiment. However, a plurality of markers M may be disposed regularly or irregularly within the one-layered elastic layer 220 so that distances from the housing 210 are different from each other as shown in FIG. 14, for example.

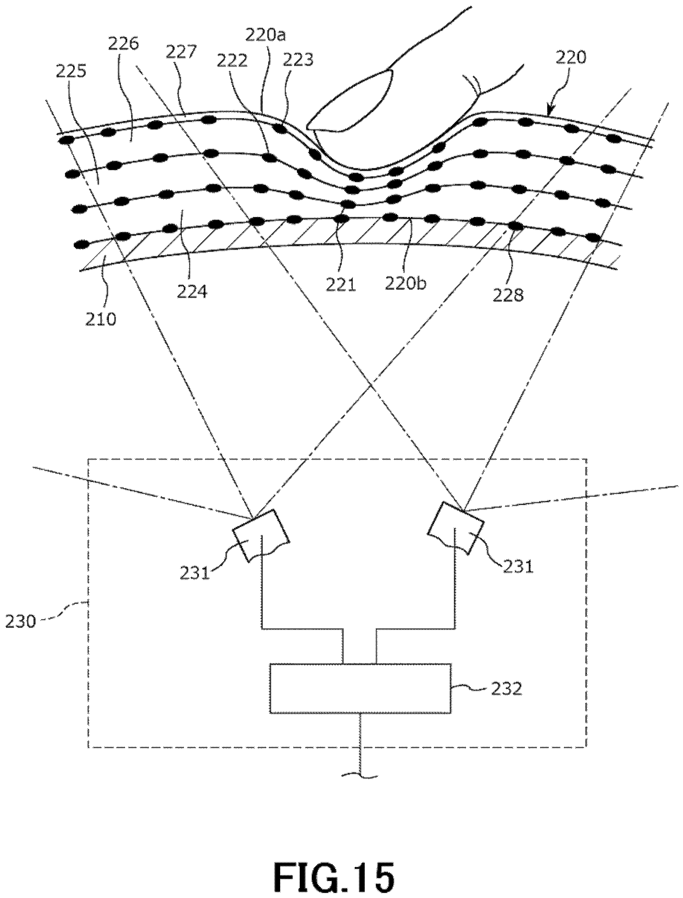

In addition, the elastic input portion 280 includes a reference marker which is not displaced due to the deformation of the elastic layer 220 and can be detected by the detection portion 230. Specifically, as shown in FIG. 15, the elastic input portion 280 includes reference markers 228 which are not displaced substantially even when the elastic layer 220 is pressed or extended, for example. Meanwhile, although the reference markers 228 are disposed between the first elastic layer 224 and the housing 210 and on the outer circumferential surface of the housing 210 in the configuration of FIG. 15, the positions of the reference markers 228 are not limited thereto. The reference markers 228 may be disposed on the inner circumferential surface of the housing 210, for example.

Each reference marker 228 has a constant relative positional relationship with each camera 231 and serves as a reference when the detection portion 230 detects the displacement of the first, second and third markers 221, 222 and 223. According to such a configuration, the detection portion 230 detects the displacement of the first, second and third markers 221, 222 and 223 with respect to the reference markers 228, for example. Thus, the detection portion 300 can obtain more accurate input information. Meanwhile, it is preferable that each reference marker 228 is different from the first, second and third markers 221, 222 and 223 in at least one of shape, hue and the like so that the detection portion 230 can distinguish (discriminate) the reference markers 228 from each of the first, second and third markers 221, 222 and 223.

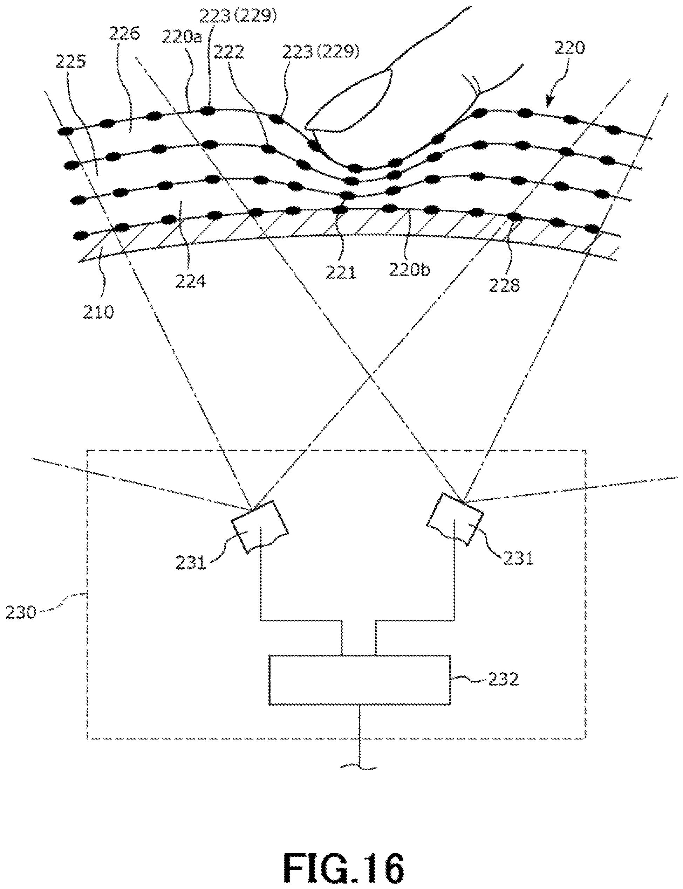

In addition, although the elastic layer 220 includes the protective layer 227 in the present embodiment, the protective layer 227 may be omitted as shown in FIG. 16. In this case, the third markers 223 are exposed on the surface of the elastic layer 220. That is, the marker M includes exposed markers 229 which are exposed on the outer circumferential surface 220a (first surface) of the elastic layer 220. The outer circumferential surface 220a of the elastic layer 220 is a place to which external force is inputted. Therefore, the followability of the marker M with respect to the input further increases by disposing the exposed markers 229 which are exposed on the outer circumferential surface 220a of the elastic layer 220. Therefore, the detection portion 230 can obtain more accurate input information.

In addition, it is preferable that each exposed marker 229 has a portion protruding from the outer circumferential surface 220a of the elastic layer 220. Thereby, a finger becomes likely to be caught by each exposed marker 229. Therefore, particularly, there is an improvement in the responsiveness of the elastic layer 220 with respect to input of sliding a finger on the outer circumferential surface 220a of the elastic layer 220. In addition, in this case, it is preferable that the Young's modulus of each exposed marker 229 is larger than the Young's modulus of a layer constituting the outer circumferential surface 220a of the elastic layer 220 or the third elastic layer 226 in the present embodiment. That is, it is preferable that each exposed marker 229 is harder than the third elastic layer 226. Thereby, a finger becomes more likely to be caught by each exposed marker 229, and thus the above-described effect becomes more remarkable.

Meanwhile, although the case where each exposed marker 229 is constituted of each third marker 223 has been described for the configuration shown in FIG. 16, the configuration of each exposed marker 229 is not particularly limited. Each exposed marker 229 may be constituted of any markers other than the third markers 223.

In addition, although each of the first markers 221, the second markers 222 and the third markers 223 is formed in the dot shape in the present embodiment, the shape of each maker is not particularly limited. Each maker may be formed in a line shape or the like or may be formed in a shape obtained by combining a line with a plurality of dots disposed on the line so as to be separated from each other. In addition, in a case where each first marker 221 is formed in a line shape, the plurality of first markers 221 may be disposed concentrically, for example. Further, the plurality of first markers 221 may be curved with no regularity along each other in an annual ring shape such as a fingerprint (pattern) (the same discussion can be applied to the second markers 222 and the third markers 223).

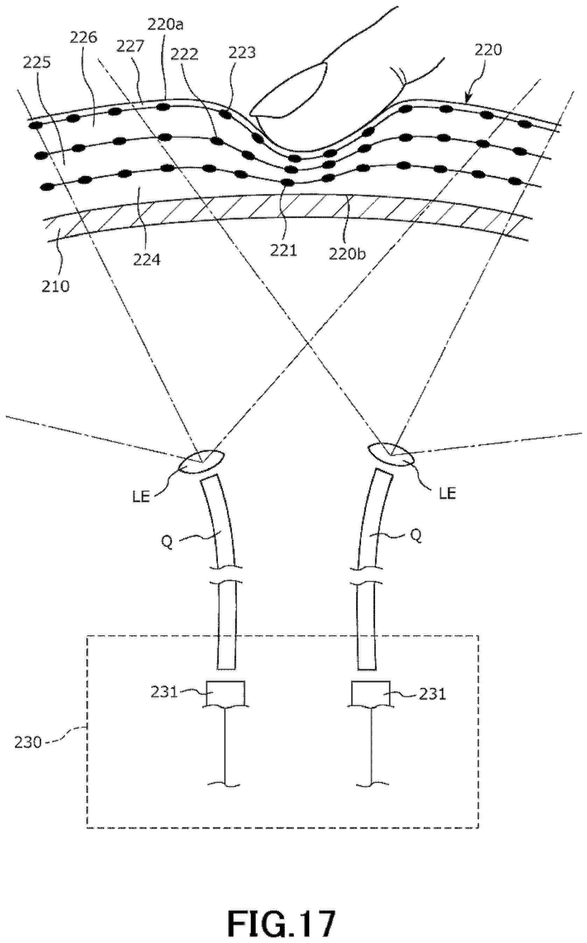

In addition, although the cameras 231 are disposed within the internal space S in the present embodiment, the positions of the cameras 231 are not particularly limited. For example, the cameras 231 may be disposed inside the leg 270 as shown in FIG. 17. In this case, for example, a configuration in which lenses LE are disposed within the internal space S and light condensed by these lenses LE is guided to each of the cameras 231 through light guide portions Q such as an optical fiber. According to such a configuration, the cameras 231 are not required to be disposed within the internal space S, and thus it is possible to achieve a reduction in the size of the housing 210.

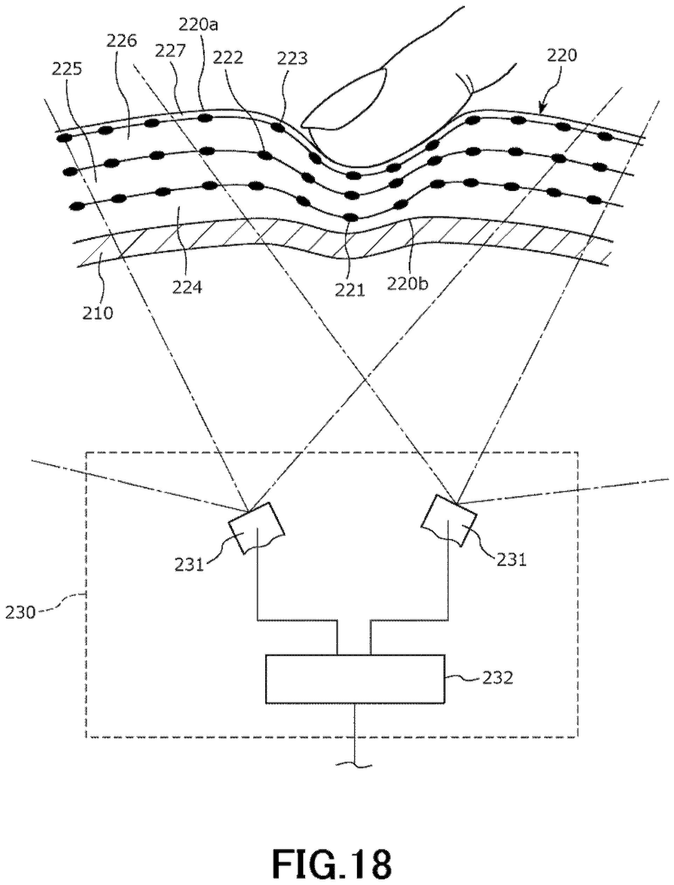

In addition, although the housing 210 is formed of a hard member in the present embodiment, the housing 210 may be formed of a soft member having a level of softness which allows the housing 210 to be bent during input as shown in FIG. 18, for example. That is, when the input is applied to the elastic layer 220, the housing 210 may be deformed together with the elastic layer 220. With this configuration, it is possible to further increase each of the amounts of the displacement of the first, second and third markers 221, 222 and 223. Therefore, the detection portion 230 can obtain the input information with a higher degree of accuracy.

In addition, the input device 200 may include a tactile sense providing portion that provides a tactile sense to a finger performing the input to the elastic layer 220. Thereby, the sense of input becomes closer to the real and more intuitive input can be performed. The configuration of the tactile sense providing portion is not particularly limited. The tactile sense providing portion may be configured to dispose a plurality of speakers inside the housing 210 and output ultrasonic waves (sonic waves) toward an input portion of the elastic layer 220 to which the input is applied from at least one of these speakers, for example. This makes it possible to provide the tactile sense to the finger performing the input to the elastic layer 220. Particularly, by outputting the ultrasonic waves from the plurality of speakers and forming a focus point of the sounds at the input portion of the elastic layer 220, it is possible to provide the tactile sense to the finger more effectively.

In addition, the input device 200 may include a heating portion that heats the elastic layer 220. With this configuration, it is possible to change the temperature of the elastic layer 220 in accordance with the temperature of the virtual stereoscopic structure X displayed on the screen 310 and to more intuitively perform the input with a small discomfort sense. In addition, in this case, the heating portion may be configured to substantially uniformly heat an entire of the elastic layer 220 or may be configured to heat only a part of the elastic layer 220. In addition, the heating portion is not particularly limited. For example, the heating portion may be configured to heat the elastic layer 220 using infrared rays. On the contrary, the input device 200 may include a cooling portion that cools the elastic layer 220. With this configuration, it is possible to provide the same effect as that of the heating portion. Naturally, the input device 200 may include both the heating portion and the cooling portion.

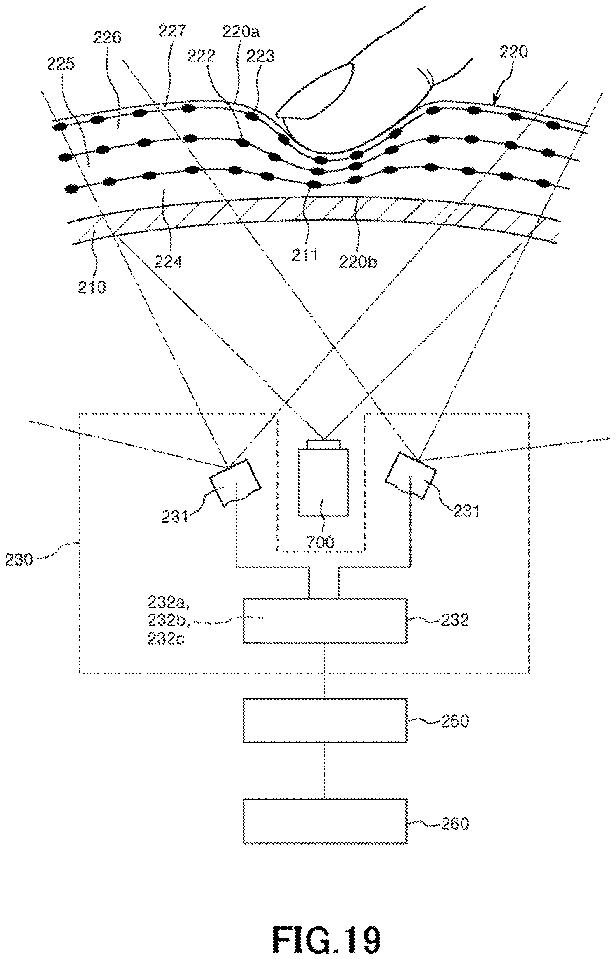

In addition, as shown in FIG. 19, the input device 200 may include an image projection unit 700 that projects image light from the inner side of the housing 210 toward the inner circumferential surface of the housing 210 and displays an image (video) capable of being visually recognized from the outer side of the elastic layer 220. The image is not particularly limited. Examples of the projected image include an image for assisting and guiding the input to the elastic layer 220. With this configuration, the operability of the input device 200 is improved and the input to the elastic layer 220 is facilitated. Meanwhile, the image projection unit 700 is not particularly limited. For example, the image projection unit 710 may be configured to include a liquid crystal type projector, an optical scanning type projector or the like.

As another use method of the configuration shown in FIG. 19, there is a method of using the input device 200 as a keyboard. In this case, alphabets, numerals, icons or the like which are arranged in a key layout represented by the QWERTY layout are displayed as images on the elastic layer 220 by the image projection unit 700, for example. A user presses a portion of the elastic layer 220 on which a character desired to be inputted is displayed for inputting the character. According to such a configuration, the change of character arrangement or the change of a language can be easily performed just by changing the projected image. This makes it possible to provide a keyboard capable of providing excellent convenience. Meanwhile, for example, in a case where the input device 200 is mainly used as a keyboard, alphabets, numerals and the like may be physically attached to the elastic layer 220 by printing, seal sticking or the like. In addition, by putting a sheet having alphabets, numerals and the like printed thereon on the elastic layer 220 so as to cover the elastic layer 220, it is possible to configure the input device 200 capable of being used as a keyboard.

Meanwhile, although the image capable of being visually recognized from the outer side of the elastic layer 220 is displayed by the image projection unit 700 in the configuration of FIG. 19, a method of displaying the image is not limited thereto. For example, a virtual image may be displayed on the screen 310 of the image display device 300 so as to be superimposed on the elastic layer 220. That is, it may be possible to take a configuration in which no image is displayed on the elastic layer 220 in the real world whereas an image can be displayed and seen on the elastic layer 220 when seeing the elastic layer 220 through the screen 310. With this configuration, it is possible to provide the same effect as that of the configuration shown in FIG. 19. In addition, since the image projection unit 700 is not required in this configuration, it is possible to achieve simplification, a cost reduction, a size reduction and the like of the input device 200 as compared with the configuration shown in FIG. 19.

### <Second Embodiment>

Next, an image display system according to a second embodiment of the present invention will be described.

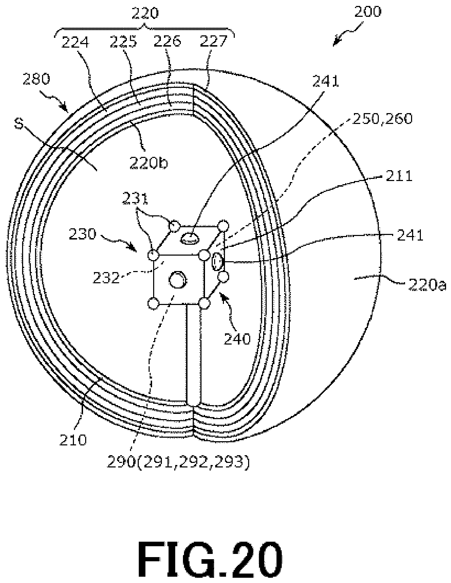

FIG. 20 is a cross-sectional perspective view of an input device included in the second embodiment of the present invention.

The image display system according to the present embodiment is the same as the image display system of the above-described first embodiment except that the configuration of the input device is different from that in the above-described first embodiment.

Meanwhile, in the following description, the image display system of the second embodiment will be described with a focus on differences from the above-described first embodiment and the description for similar particulars will not be given. In addition, in FIG. 20, the same components as those in the above-described embodiment are denoted by the same reference numerals and signs.

As shown in FIG. 20, an input device 200 of the present embodiment has a configuration in which the leg 270 is omitted from the configuration of the above-described first embodiment. For example, a user can hold the input device 200 of the present embodiment in his/her hand to use the input device 200. In addition, the input device 200 of the present embodiment includes a displacement detection portion 290 which is disposed within the internal space S and detects the displacement (such as posture change or movement) of the input device 200. Meanwhile, although the displacement detection portion 290 is disposed within the support member 211 in the present embodiment, the position of the displacement detection portion 290 is not particularly limited.

For example, the displacement detection portion 290 includes an acceleration sensor 291 which detects acceleration and an angular velocity sensor 292 which detects angular velocity. The displacement detection portion 290 obtains displacement information containing the posture change, movement locus, acceleration and angular velocity which are applied during movement and the like of the input device 200 on the basis of detection results of the acceleration sensor 291 and the angular velocity sensor 292. The signal generation portion 250 generates an input signal (displacement input signal) on the basis of the displacement information detected by the displacement detection portion 290. That is, in the present embodiment, the signal generation portion 250 generates the displacement input signal in addition to the contact input signal and the non-contact input signal which are described in the above-described first embodiment. For example, according to the displacement input signal when the input device 200 is rotated, the virtual stereoscopic structure X in the screen 310 can be rotated according to the rotation of the input device 200. Further, when the input device 200 is moved, the virtual stereoscopic structure X in the screen 310 can be moved according to the movement of the input device 200. In this manner, since the input for the rotation, the movement or the like can be performed, it is possible to perform more intuitive input with the input device 200.

Particularly, in the present embodiment, when axes orthogonal to each other are respectively defined as an X-axis, a Y-axis and a Z-axis, a triaxial acceleration sensor capable of detecting acceleration in the respective axial directions of the X-axis, the Y-axis and the Z-axis is used as the acceleration sensor 291 and a triaxial angular velocity sensor capable of detecting angular velocity around the respective axes of the X-axis, the Y-axis and the Z-axis is used as the angular velocity sensor 292. Therefore, it is possible to generate a higher-accuracy input signal. However, the configuration of the displacement detection portion 290 is not particularly limited as long as it can detect at least one physical quantity. For example, any one of the acceleration sensor 291 and the angular velocity sensor 292 may be omitted. In addition, a physical quantity to be detected is not limited to the acceleration and the angular velocity. The physical quantity to be detected may be pressure, gravity or the like, for example.

In addition, the displacement detection portion 290 includes a device for performing a position tracking (spatial recognition) for the input device 200. The device for performing the position tracking is not particularly limited. For example, in the present embodiment, an infrared ray emission device 293 that emits infrared rays is included therein. In this case, the infrared rays emitted from the infrared ray emission device 293 are recognized with a plurality of infrared cameras disposed within a space, for example. This makes it possible to perform the position tracking for the input device 200.

Although the displacement detection portion 290 has been explained in the above description, the configuration of the displacement detection portion 290 is not particularly limited.

In such a second embodiment, it is also possible to provide the same effect as that in the above-described first embodiment.

### <Third Embodiment>

Next, an image display system according to a third embodiment of the present invention will be described.

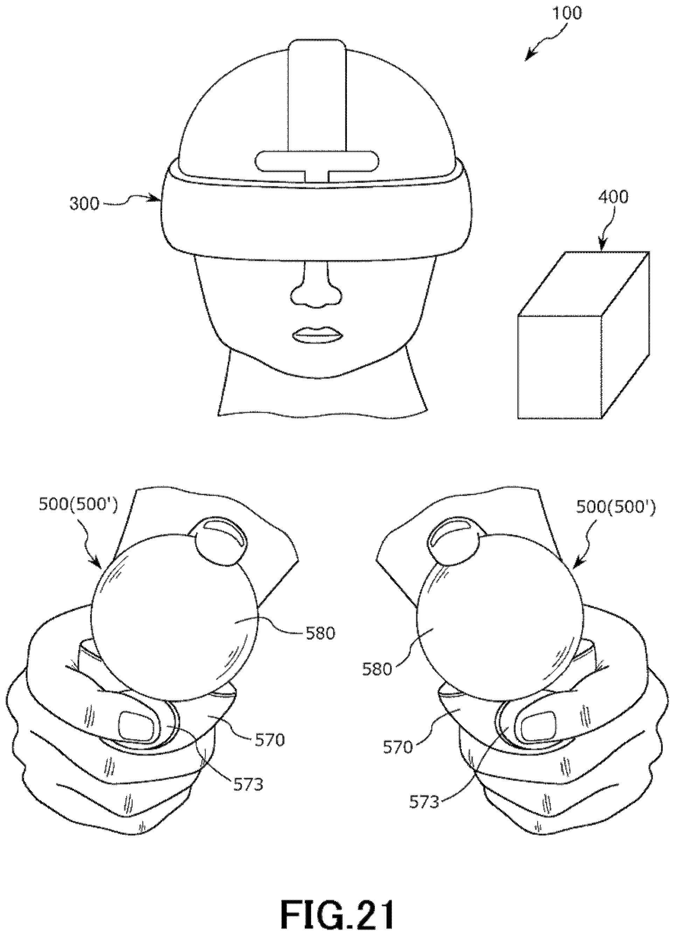

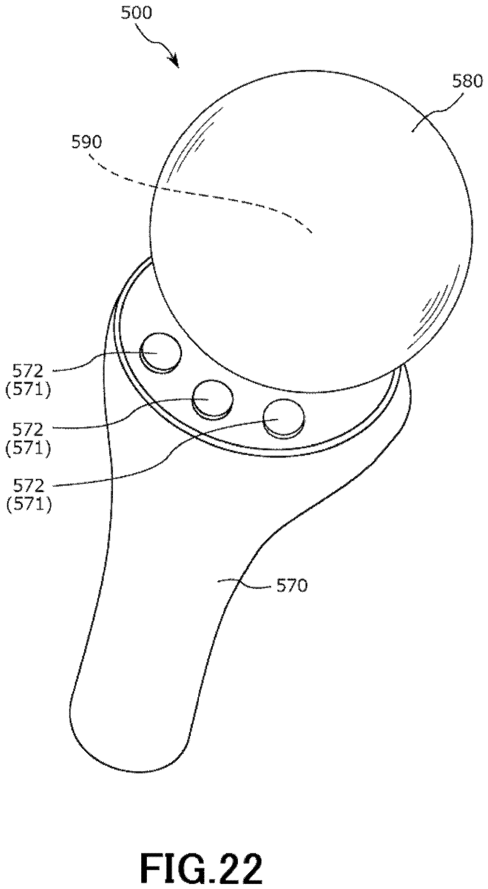

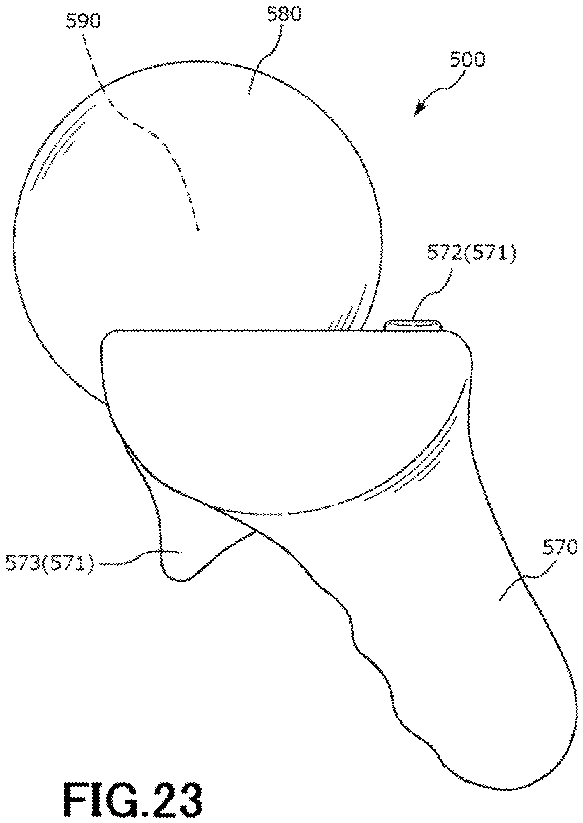

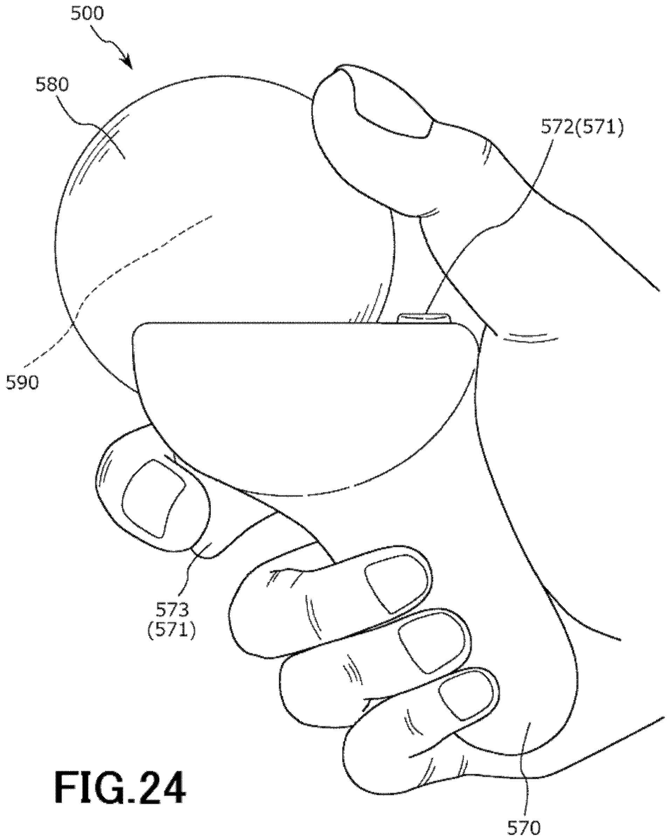

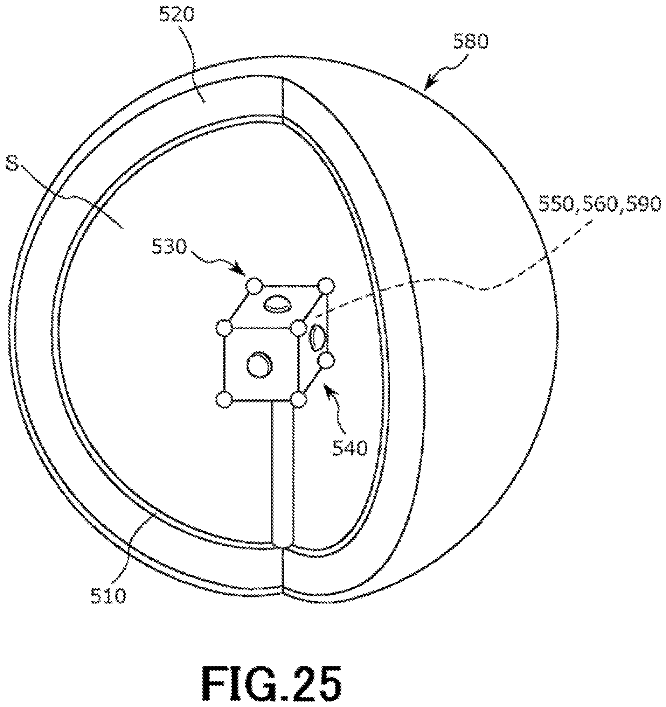

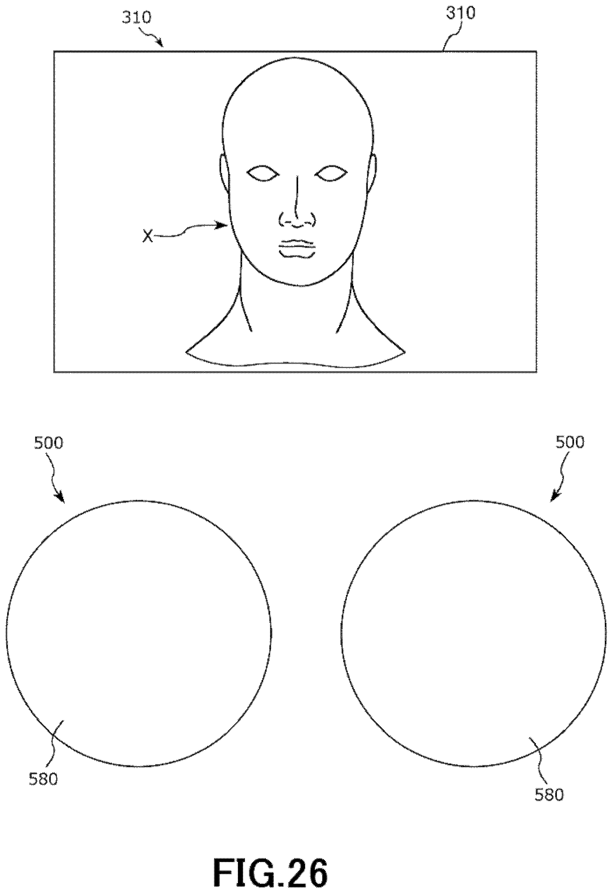

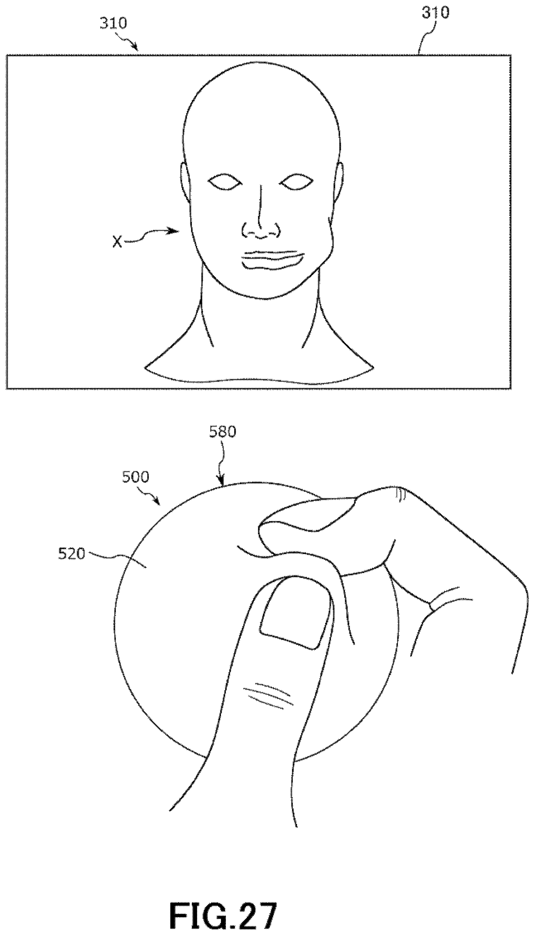

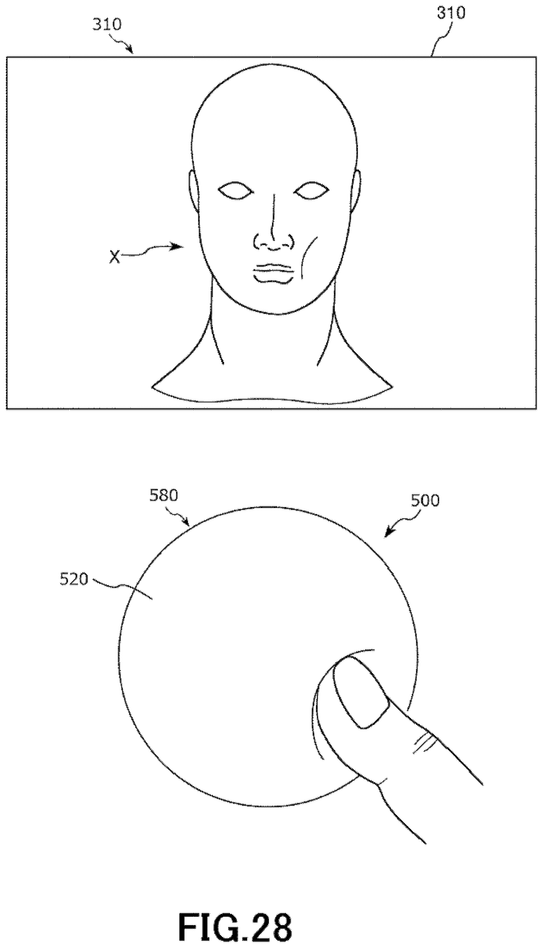

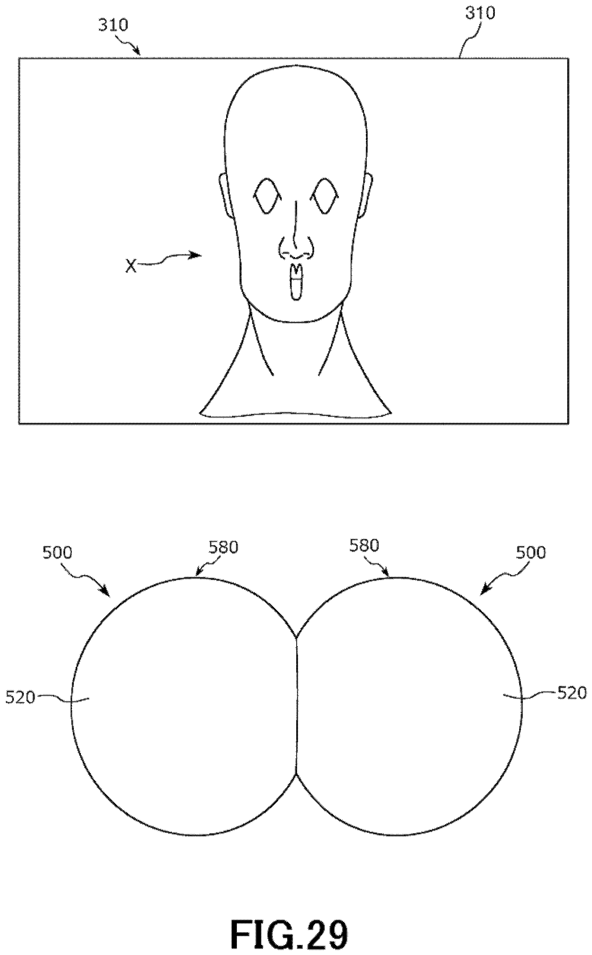

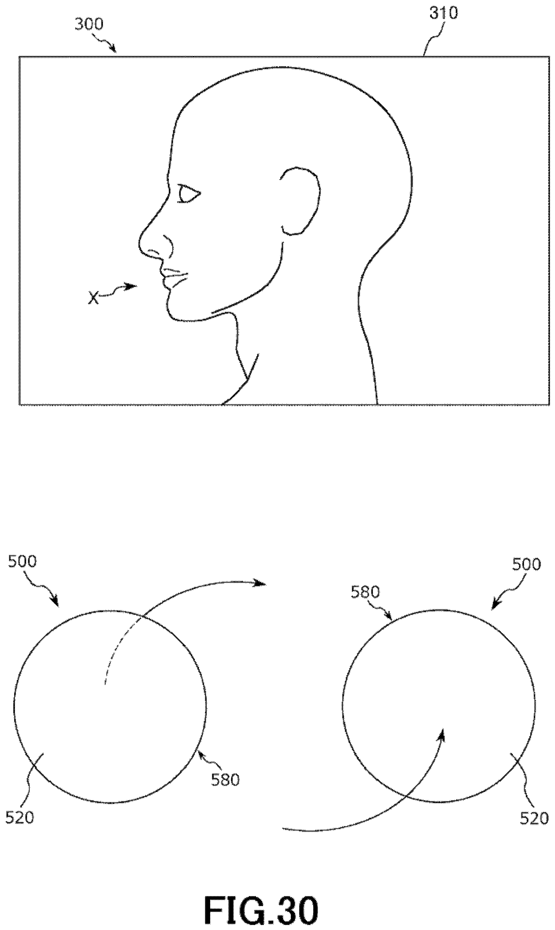

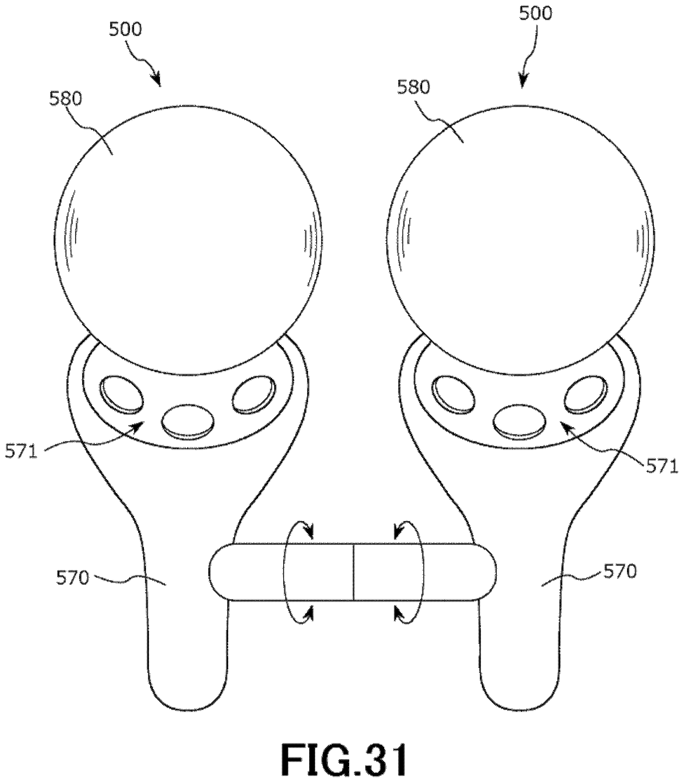

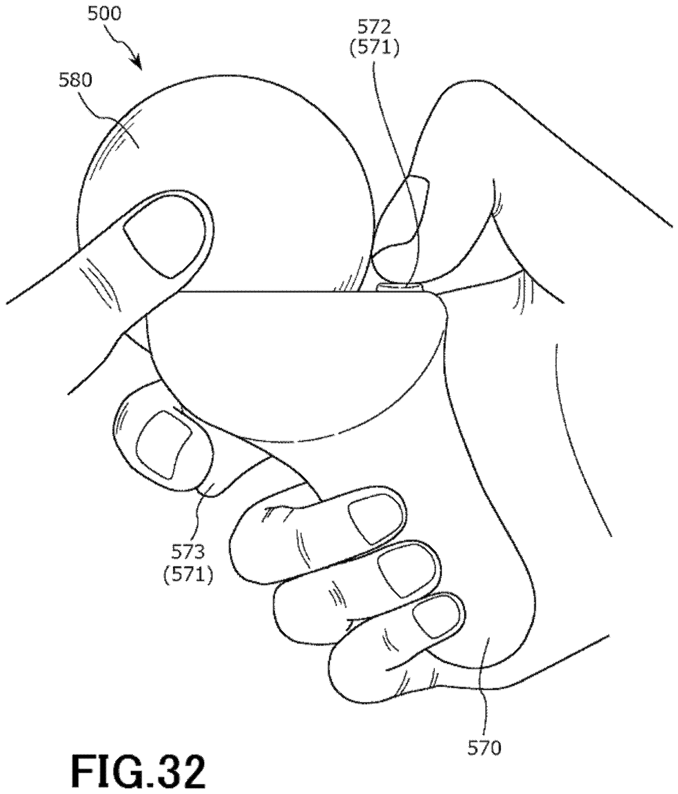

FIG. 21 is a configuration diagram of the image display system according to the third embodiment of the present invention. FIG. 22 is a perspective view of an input device shown in FIG. 21. FIG. 23 is a side view of the input device shown in FIG. 22. FIG. 24 is a side view illustrating a state where the input device shown in FIG. 22 is held. FIG. 25 is a partial cross-sectional perspective view of an elastic input portion included in the input device shown in FIG. 22. FIG. 26 is a diagram illustrating an example of a use method of the image display system. FIG. 27 is a diagram illustrating an example of a use method of the image display system. FIG. 28 is a diagram illustrating an example of a use method of the image display system. FIG. 29 is a diagram illustrating an example of a use method of the image display system. FIG. 30 is a diagram illustrating an example of a use method of the image display system. FIG. 31 is a perspective view illustrating a modification example of the input device. FIG. 32 is a side view illustrating a modification example the input device.

The image display system according to the present embodiment is the same as the image display system of the above-described first embodiment except that the configuration of the input device is different from that in the above-described first embodiment.

Meanwhile, in the following description, the image display system of the second embodiment will be described with a focus on differences from the above-described first embodiment and the description for similar particulars will not be given. In addition, in FIGs. 21 to 31, the same components as those in the above-described embodiment are denoted by the same reference numerals and signs.

An image display system 100 shown in FIG. 21 includes an input device set 500'havingtwo input devices 500, an image display device 300 and a terminal 400.

Although the image display device 300 has the substantially same configuration as that in the above-described first embodiment, it is preferable that the image display device 300 further has a position tracking function. With this configuration, it is possible to detect a user's position in a space and to change (follow) an image which is displayed on the screen 310 of the image display device 300 in accordance with the user's movement. Therefore, it is possible to provide the image display system 100 having more reality.

The two input devices 500 are used in a state of being held by a user and configured such that one of the input devices 500 is a user's right-hand input device 500 and the other is a user's left-hand input device 500. The two input devices 500 have the same configuration as each other except that the input devices 500 are configured symmetrically for use with the right-hand and the left-hand. Therefore, hereinafter, one of the input devices 500 will be representatively described and the description for the other one of the input devices 500 will not be given.

As shown in FIGs. 22 and 23, the input device 500 includes an elastic input portion 580, a connecting portion 570 connected to the elastic input portion 580, an input portion 571 provided on the connecting portion 570 and a displacement detection portion 590 which detects the displacement of the input device 500. Particularly, in the present embodiment, the connecting portion 570 is used as a holding portion which is held by a user. With this configuration, the user can easily grip the input device 500 and the operability of the input device 500 is improved. In this manner, since the input device 500 includes the connecting portion 570, it is possible to use the connecting portion 570 as the holding portion and to dispose various functional portions such as the input portion 571 in the connecting portion 570. Therefore, the operability of the input device 500 is improved and it becomes easier to add various functions to the input device 500.

In addition, although this matter is not shown in the drawings, the input device 500 includes a power supply battery therein. Since the power supply battery is included therein, it is possible to realize the wireless input device 500 which leads to an improvement in the operability of the input device 500. However, it may take a configuration in which the power supply battery is omitted and a power supply cord is provided to the input device 500.

In such an input device 500, as shown in FIG. 24, the elastic input portion 580 can be operated by at least a user's thumb in a state where the connecting portion 570 is held. The position of the elastic input portion 580 with respect to the connecting portion 570 is set so as to correspond this usage state.

As shown in FIG. 25, the elastic input portion 580 includes a housing 510, an elastic layer 520 disposed on the outer circumferential surface of the housing 510, that is, disposed on the outer side of the housing 510, a detection portion 530 which is disposed inside the housing 510 and detects the deformation of the elastic layer 520, a light source 540 which illuminates the elastic layer 520, a signal generation portion 550 which generates an input signal from the detection result of the detection portion 530 and a transmission portion 560 that transmits the input signal generated by the signal generation portion 550 to the terminal 400.

The elastic input portion 580 has the same configuration as that of the elastic input portion 280 of the above-described first embodiment except that its size is different from that in the above-described first embodiment. More specifically, the housing 510, the elastic layer 520, the detection portion 530, the light source 540, the signal generation portion 550 and the transmission portion 560 of the present embodiment have the same configurations as those of the housing 210, the elastic layer 220, the detection portion 230, the light source 240, the signal generation portion 250 and the transmission portion 260 of the above-described first embodiment, respectively. Therefore, the detailed description for the elastic input portion 280 will not be given.

Meanwhile, although the diameter of the elastic input portion 580 is not particular limited, it is preferable that the elastic input portion 580 has a size which allows the elastic input portion 500 to be gripped in one hand. Specifically, it is preferable that the diameter of the elastic input portion 580 is equal to or greater than 50 mm and equal to or less than 100 mm and it is more preferable that the diameter of the elastic input portion 580 is equal to or greater than 60 mm and equal to or less than 80 mm, for example. With this configuration, it is possible to obtain the elastic input portion 580 having a size appropriate for operation in a state where the connecting portion 570 is held. Therefore, the operability of the input device 500 is improved.

As shown in FIGs. 22 and 23, the connecting portion 570 is a portion which is connected to the elastic input portion 580 and gripped by a user. By providing such a connecting portion 570 in the input device 500, the input device 500 can be operated in a state of being held. This leads to an improvement in its operability. Particularly, as shown in FIG. 24, the connecting portion 570 of the present embodiment is configured to be gripped in three of the middle finger, the ring finger and the little finger of a user's hand. Therefore, the connecting portion 570 can be held with a stable posture, and thus the operability of the input device 500 is improved.

Although the configuration of the connecting portion 570 is not particular limited as long as it can be held by a user, the connecting portion 570 may be configured to be capable of being held in one or two of the index finger, the middle finger, the ring finger and the little finger of a user's hand or may be configured to be capable of being held in four of the index finger, the middle finger, the ring finger and the little finger of the user's hand, for example.

In addition, although this matter is not shown in the drawings, the connecting portion 570 may include a strap (fall prevention portion) constituted of a ring-shaped string, for example. According to such a configuration, an arm of a user can be inserted into the strap to prevent the input device 500 from falling to a floor even if the connecting portion 570 is left from the hand. Therefore, the input device 500 having high safety can be obtained.

As shown in FIGs. 22,23 and 24, the input portion 571 is disposed on the connecting portion 570. In the input portion 571, it is possible to perform input different from that in the elastic input portion 580. By providing such an input portion 571 in the input device 500, it is possible to generate more various input signals than the case of only using the input from the elastic input portion 580.

It is preferable that the input portion 571 includes at least one input button. With this configuration, the configuration of the input portion 571 is simplified and the operation of the input portion 571 is also simplified. The input portion 571 of the present embodiment includes a plurality of push-type first input buttons 572 capable of being operated by the thumb and a trigger-type second input button 573 capable of being operated by the index finger in a state where the input device 500 is held. In this manner, since the plurality of buttons capable of being operated by the different fingers are disposed, the input portion 571 having higher operability can be obtained.

Meanwhile, the configuration of the input portion 571 is not limited thereto. The number of buttons and the positions thereof can be appropriately set. In addition, for example, a mouse pad, a touch panel, a stick-shaped button capable of being moved right, left, back and forth and the like may be further included in the input portion 571. Further, at least one of the first and second input buttons 572 and 573 may be replaced with these items.

The displacement detection portion 590 has a function of detecting the displacement, specifically, the change of posture, movement and the like of the input device 500. The displacement detection portion 590 has the same configuration as that of the displacement detection portion 290 of the above-described second embodiment. Therefore, the detailed description for the displacement detection portion 590 will not be given. However, the configuration of the displacement detection portion 590 is not particularly limited as long as the above-described function can be provided.

Although the position of the displacement detection portion 590 is not particular limited, the displacement detection portion 590 may be disposed within the housing 510 or may be disposed within the connecting portion 570. However, it is preferable that the displacement detection portion 590 is disposed at the central portion of the housing 510. With this configuration, among other things, it is possible to accurately detect the displacement of the elastic input portion 580 which is a main portion for performing the input. Therefore, it becomes easier to allow a virtual image displayed on the screen 310 to follow the displacement of the elastic input portion 580 and the operability of the image display system 100 is further improved.

The configuration of the input device 500 has been explained in the above description. Next, an example of a specific use method of the image display system 100 will be described. For example, a virtual stereoscopic structure X of the human head as shown in FIG. 26 is displayed on the screen 310 of the image display device 300 worn by a user

A user estimates the elastic input portion 580 of the input device 500 held in the right-hand as the half body of the virtual stereoscopic structure X on the observer's right side and estimates the elastic input portion 580 of the input device 500 held in the left-hand as the half body of the virtual stereoscopic structure X on the observer's left side. For example, as shown in FIG. 27, the user can extend the cheek of the virtual stereoscopic structure X on the observer's right side by extending a portion of the elastic input portion 580 which is equivalent to the cheek on the right-hand side. In addition, the cheek of the virtual stereoscopic structure X is restored when the input to the elastic input portion 580 is released. Further, for example, when the second input button 573 is pressed in a state where the cheek is extended, a state where the cheek of the virtual stereoscopic structure X is extended is maintained. Similarly, as shown in FIG. 28, the user can press the cheek of the virtual stereoscopic structure X on the observer's right side by pressing the portion of the elastic input portion 580 which is equivalent to the cheek on the right-hand side.

In addition, as shown in FIG. 29, the virtual stereoscopic structure X can be pinched and deformed in a horizontal direction by pushing the elastic input portion 580 on the right-hand side and the elastic input portion 580 on the left-hand side so as to get closer to each other. In this manner, it may take a configuration in which the input is performed by moving the elastic input portions 580 of the two input devices 500 so as to contact with each other and this makes it possible to perform more intuitive input.

In addition, as shown in FIG. 30, when the input device 500 on the right-hand side and the input device 500 on the left-hand side are moved in the same direction so as to draw a circle, the virtual stereoscopic structure X can be rotated in that direction. Thereby, it is possible to direct the virtual stereoscopic structure X toward an any desired direction.

In this manner, according to the input device 500, intuitive input can be performed and the input can be further performed finely.

In such a third embodiment, it is also possible to provide the same effect as that in the above-described first embodiment.

Meanwhile, the configuration of the input device 500 is not limited to the above-described configuration. For example, as shown in FIG. 31, the right-hand input device 500 and the left-hand input device 500 may be configured to be detachably coupled to each other. That is, the input device 500 may be configured to be capable of selecting a state where the right-hand input device 500 and the left-hand input device 500 are used independently and a state where the right-hand input device 500 and the left-hand input device 500 are coupled to each other and are used integrally. Meanwhile, in the state where the right-hand input device 500 and the left-hand input device 500 are coupled to each other, it is preferable that the two input devices 500 can be rotated with respect to each other. With this configuration, the rotation angles, angular velocities during rotation and the like of the two input devices 500 can be detected by the displacement detection portion 590, and thus it is also possible to generate a new input signal (displacement input signal) according to the detection results.

In addition, although the configuration in which the input device set 500' includes two input devices 500 has been described in the present embodiment, the input device set 500' may include three or more input devices 500. In addition, although the image display system 100 includes the input device set 500', that is, includes the two input devices 500 in the present embodiment, the image display system 100 may include at least one input device 500. For example, in a case where the image display system 100 includes one input device 500, the input device 500 may be held in one hand and the input device 500 may be operated by the fingers of both hands as shown in FIG. 32. Meanwhile, although the connecting portion 570 is held in the right-hand, the input portion 571 is operated by the fingers of the right-hand and the elastic input portion 580 is operated by the fingers of the left-hand in the shown example, an operation method is not particularly limited.

### <Fourth Embodiment>

Next, an image display system according to a fourth embodiment of the present invention will be described.

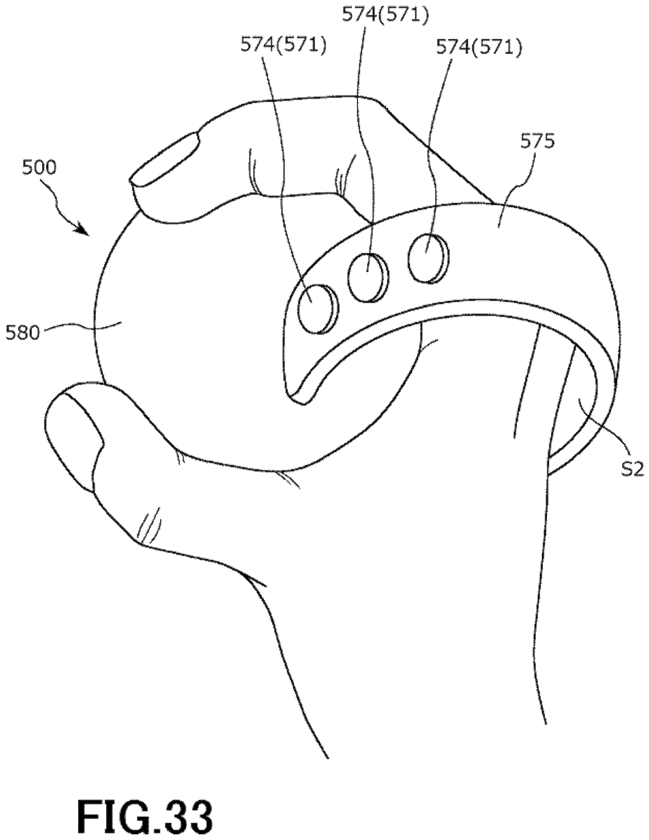

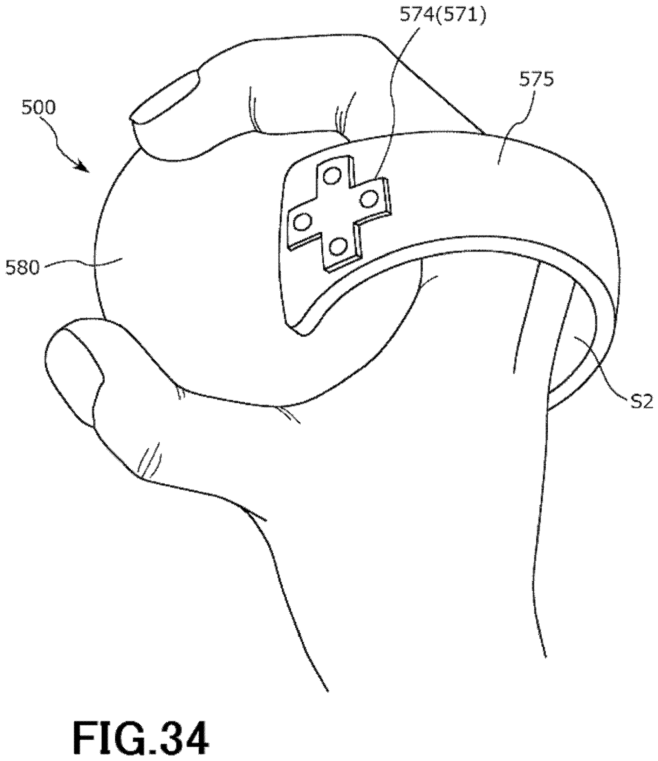

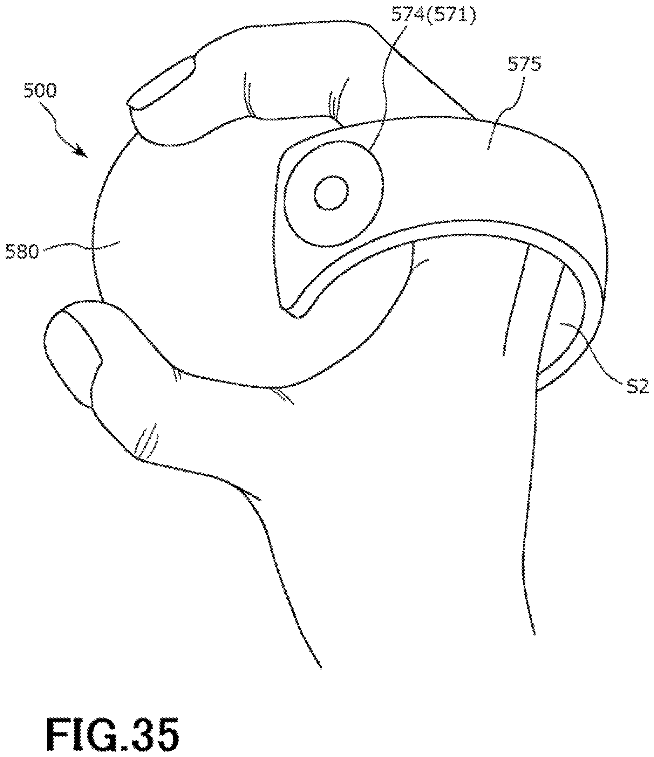

FIG. 33 is a perspective view of an input device according to the fourth embodiment of the present invention. FIGs. 34 and 35 are perspective views illustrating modification examples of the input device shown in FIG. 33, respectively.

The image display system according to the present embodiment is the same as the image display system of the above-described third embodiment except that the configuration of the input device is different from that in the above-described third embodiment.

Meanwhile, in the following description, the image display system of the fourth embodiment will be described with a focus on differences from the above-described third embodiment and the description for similar particulars will not be given. In addition, in FIGs. 33 to 35, the same components as those in the above-described embodiment are denoted by the same reference numerals and signs. In addition, the two input devices 500 have the same configuration as each other except that the input devices 500 are configured symmetrically for use with the right-hand and the left-hand. Therefore, hereinafter, one of the input devices 500 will be representatively described and the description for the other one of the input devices 500 will not be given.

As shown in FIG. 33, the input device 500 of the present embodiment includes an insertion portion 575 (connecting portion) which is connected to the elastic input portion 580 and configured so that the hand can be inserted between the elastic input portion 580 and the insertion portion 575 instead of the connecting portion 570 of the above-described third embodiment. In addition, both ends of the insertion portion 575 are connected to the elastic input portion 580 and space S2 for inserting the hand therein is formed between the elastic input portion 580 and the insertion portion 575. A user holds the elastic input portion 580 in a gripping manner where the hand is inserted into the space S2. By using the insertion portion 575 with such a configuration, it is possible to prevent the input device 500 from falling from the hand, and thus the safety of the input device 500 is improved. In addition, since the elastic input portion 580 is directly gripped by the hand, it is possible to more simply perform the input to the elastic input portion 580.

In addition, the input portion 571 is provided on the insertion portion 575. The input portion 571 includes a plurality of input buttons 574 capable of being operated by the thumb in a state where the input device 500 is held. Meanwhile, the configuration of the input portion 571 is not particularly limited. For example, as each of the input buttons 574, a cross-key type button as shown in FIG. 34 may be used or a click-wheel type button as shown in FIG. 35 may be used. In addition, each of the input buttons 574 may be a touch type button having a built-in touch sensor in addition to a physical key. In addition, these items may be appropriately combined. In addition, the input buttons 574 are not limited to being operated by the thumb and may be operated by other fingers.

In such a fourth embodiment, it is also possible to provide the same effect as that in the above-described first embodiment.

### <Fifth Embodiment>

Next, an image display system according to a fifth embodiment of the present invention will be described.

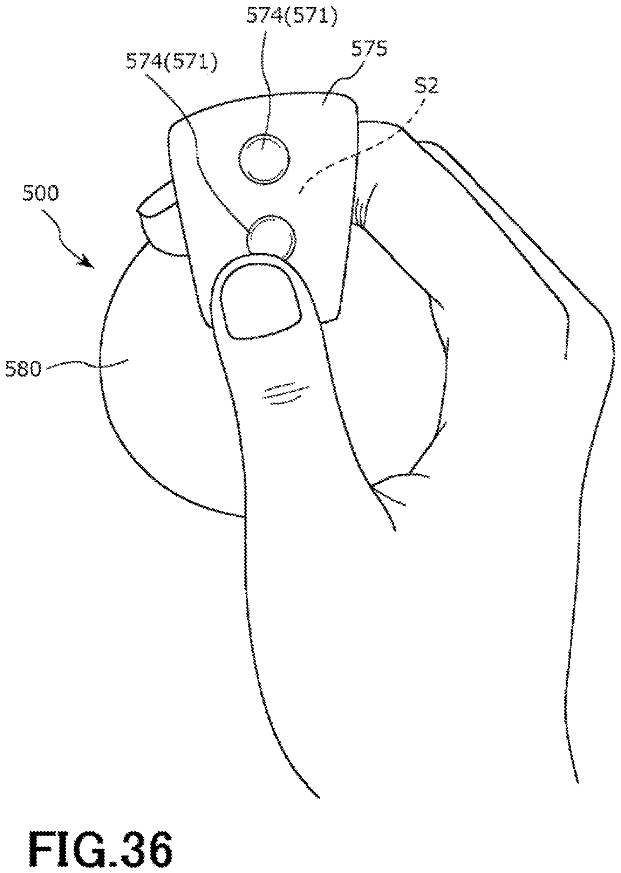

FIG. 36 is a perspective view of an input device of the fifth embodiment of the present invention.

The image display system according to the present embodiment is the same as the image display system of the above-described third embodiment except that the position of the insertion portion is different from that in the above-described third embodiment.

Meanwhile, in the following description, the image display system of the fifth embodiment will be described with a focus on differences from the above-described third embodiment and the description for similar particulars will not be given. In addition, in FIG. 36, the same components as those in the above-described embodiment are denoted by the same reference numerals and signs. In addition, the two input devices 500 have the same configuration as each other except that the input devices 500 are configured symmetrically for use with the right-hand and the left-hand. Therefore, hereinafter, one of the input devices 500 will be representatively described and the description for the other one of the input devices 500 will not be given.

As shown in FIG. 36, in the input device 500 of the present embodiment, the insertion portion 575 is disposed so that the insertion depth of the finger becomes smaller than the above-described fourth embodiment. According to such an arrangement, the insertion portion 575 becomes likely to overlap the thumb in a state where the elastic input portion 580 is gripped. Therefore, it becomes easier to operate the input buttons 574 disposed on the insertion portion 575 with the thumb. In addition, since the insertion portion 575 can be held in a pinching manner with, for example, the thumb and the index finger, it becomes easier to hold the input device 500. Meanwhile, the configuration of the input button 574 is not particularly limited as is the case with the above-described fourth embodiment.

In such a fifth embodiment, it is also possible to provide the same effect as that in the above-described first embodiment.

### <Sixth Embodiment

Next, an image display system of a sixth embodiment of the present invention will be described.

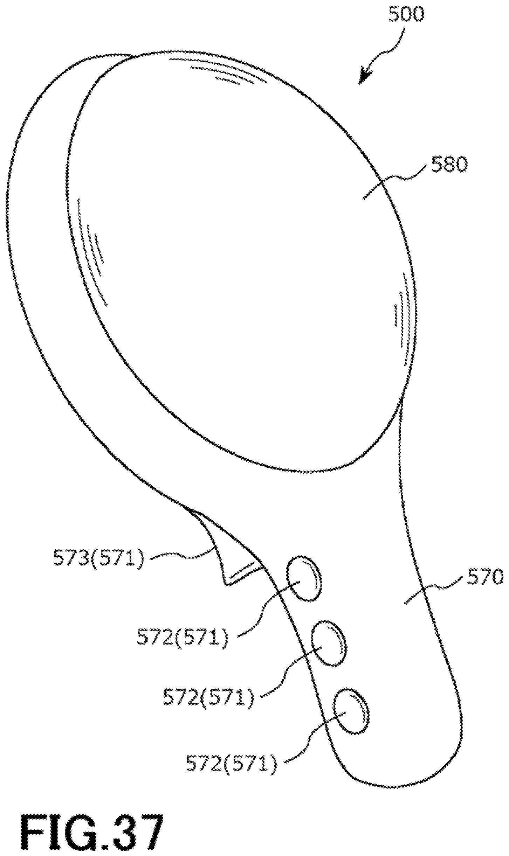

FIG. 37 is a perspective view of an input device of the sixth embodiment of the present invention.

The image display system according to the present embodiment is the same as the image display system of the above-described third embodiment except that the whole shape of the input device 500 is different from that in the above-described third embodiment.

Meanwhile, in the following description, the image display system of the sixth embodiment will be described with a focus on differences from the above-described third embodiment and the description for similar particulars will not be given. In addition, in FIG. 37, the same components as those in the above-described embodiment are denoted by the same reference numerals and signs. In addition, the two input devices 500 have the same configuration as each other except that the input devices 500 are configured symmetrically for use with the right-hand and the left-hand. Therefore, hereinafter, one of the input devices 500 will be representatively described and the description for the other one of the input devices 500 will not be given.

As shown in FIG. 37, in the input device 500 of the present embodiment, the elastic input portion 580 is formed in a dome shape which is curved so as to outwardly protrude and is formed in an oval shape when seen in a plan view. In addition, the elastic input portion 580 is located on one surface side of the connecting portion 570. With such a shape, it is possible to obtain the input device 500 which is easy to be blindly operated. Therefore, it is possible to easily perform the operation of the input device 500 in a state where the input device 500 is in the pocket of clothes, for example. By combining the input device 500 of the present embodiment having such a feature is combined with, particularly, the augmented reality (AR) type image display device 300, it is possible to further improve its operability.

In such a sixth embodiment, it is also possible to provide the same effect as that in the above-described first embodiment.

### <Seventh Embodiment>

Next, an image display system according to a seventh embodiment of the present invention will be described.

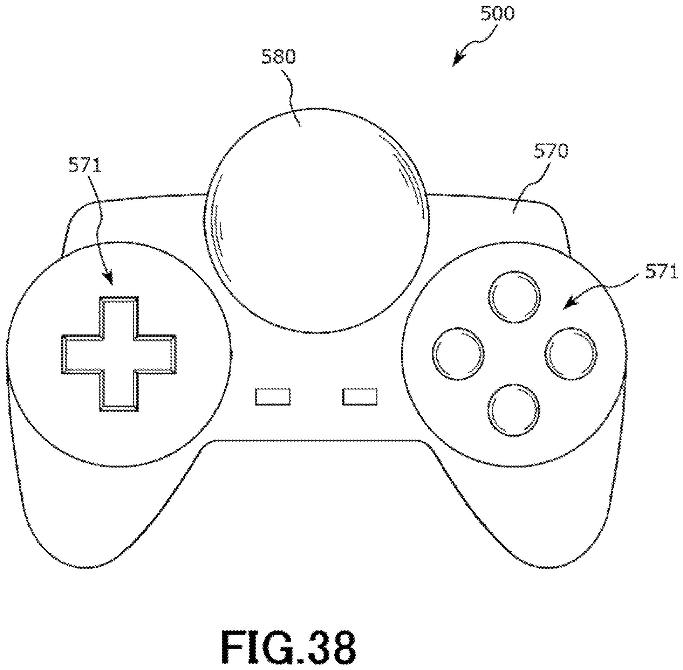

FIG. 38 is a perspective view of an input device of the seventh embodiment of the present invention.

The image display system according to the present embodiment is the same as the image display system of the above-described third embodiment except that the whole shape of the input device is different from that in the above-described third embodiment.

Meanwhile, in the following description, the image display system of the seventh embodiment will be described with a focus on differences from the above-described third embodiment and the description for similar particulars will not be given. In addition, in FIG. 38, the same components as those in the above-described embodiment are denoted by the same reference numerals and signs.

An input device 500 of the present embodiment is applied to a video-game controller, for example. As shown in FIG. 38, such an input device 500 includes a connecting portion 570 to be held by both hands and an elastic input portion 580 located at the central portion of the connecting portion 570. Meanwhile, the number of elastic input portions 580 and the positions thereof are not particularly limited. For example, two elastic input portions 580 may be separately disposed on the right and left sides of the connecting portion 570. That is, one elastic input portion 580 for performing an operation with the right-hand and another elastic input portion 580 for performing an operation with the left-hand may be provided.

In addition, input portions 571 each having a configuration that suits user's need are disposed at a left portion (in an area capable of being operated by the fingers of the left-hand in a state where the connecting portion 570 is held) and a right portion (in an area capable of being operated by the fingers of the right-hand in a state where the connecting portion 570 is held) of the connecting portion 570. Meanwhile, although a cross key is disposed on the right side and four buttons are disposed on the left side in the present embodiment, the configurations of the input portions 571 are not limited thereto. For example, as described above in the aforementioned embodiment, a click wheel, a touch input type button or the like can be used and can be appropriately combined.

In such a seventh embodiment, it is also possible to provide the same effect as that in the above-described first embodiment.

### <Eighth Embodiment>

Next, an image display system according to an eighth embodiment of the present invention will be described.

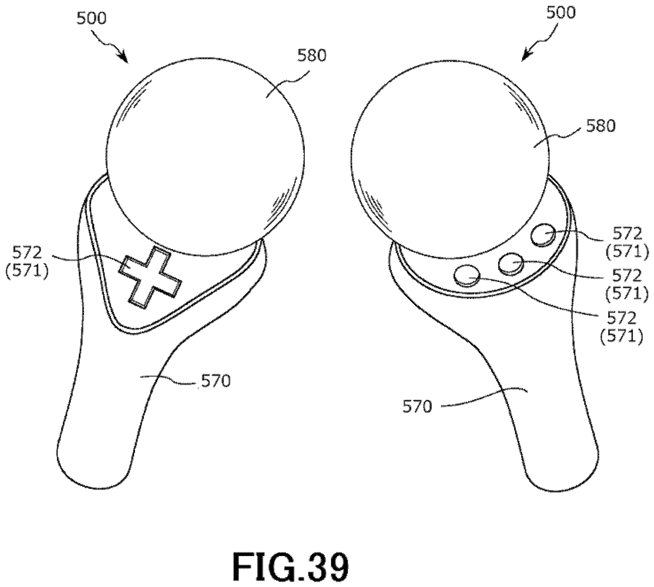

FIG. 39 is a perspective view of an input device of the eighth embodiment of the present invention.

The image display system according to the present embodiment is the same as the image display system of the above-described third embodiment except that the configurations of the input portions of the two input devices are different from those in the above-described third embodiment.

Meanwhile, in the following description, the image display system of the eighth embodiment will be described with a focus on differences from the above-described third embodiment and the description for similar particulars will not be given. In addition, in FIG. 39, the same components as those in the above-described embodiment are denoted by the same reference numerals and signs.

As shown in FIG. 39, in the present embodiment, the configuration of the input portion 571 of the left-hand input portion 500 is different from the configuration of the input portion 571 of the right-hand input portion 500. Specifically, the input portion 571 of the left-hand input device 500 includes a first input button 572 constituted of a cross key and a trigger-type second input button 573 (not shown). On the other hand, the input portion 571 of the right-hand input device 500 includes a plurality of push-type first input buttons 572 and a trigger-type second input button 573 (not shown). In this manner, since the configurations of the input portions 571 of the right-hand and left-hand input devices 500 are made different from each other, it is possible to perform more various input.

In such an eighth embodiment, it is also possible to provide the same effect as that in the above-described first embodiment.

### <Ninth Embodiment>

Next, an image display system according to a ninth embodiment of the present invention will be described.

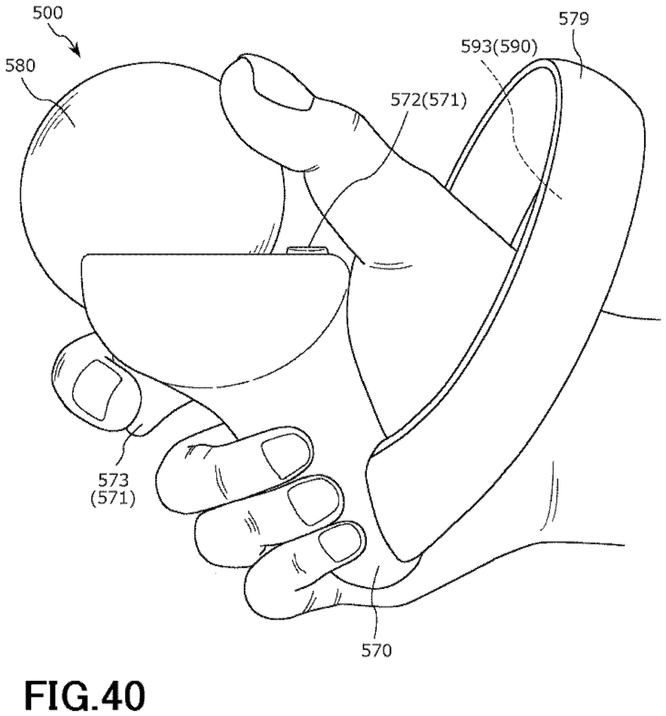

FIG. 40 is a side view of an input device of the ninth embodiment of the present invention.

The image display system according to the present embodiment is the same as the image display system of the above-described third embodiment except that the configuration of the input device is different from that in the above-described third embodiment.

Meanwhile, in the following description, the image display system of the ninth embodiment will be described with a focus on differences from the above-described third embodiment and the description for similar particulars will not be given. In addition, in FIG. 40, the same components as those in the above-described embodiment are denoted by the same reference numerals and signs. In addition, the two input devices 500 have the same configuration as each other except that the input devices 500 are configured symmetrically for use with the right-hand and the left-hand. Therefore, hereinafter, one of the input devices 500 will be representatively described and the description for the other one of the input devices 500 will not be given.

As shown in FIG. 40, the input device 500 of the present embodiment includes a circular ring portion 579 provided on the lower end (an end on the side opposite to the elastic input portion 580) of the connecting portion 570. In a state where the input device 500 is held, the ring portion 579 is disposed so as to surround the vicinity of the back of the hand. A device for performing the position tracking (spatial recognition) such as a displacement detection portion 590 is provided in this ring portion 579. Although such a device is not particularly limited, the device includes an infrared ray emission device 593 that emits infrared rays in the present embodiment. Meanwhile, the infrared ray emission device 593 has the same function as that of the infrared ray emission device 293 of the above-described second embodiment. Therefore, the infrared rays emitted from the infrared ray emission device 593 can be used by, for example, a plurality of infrared cameras disposed within a space for the position tracking. This makes it possible to perform the position tracking for the input device 500.

Meanwhile, the ring portion 579 may be provided with other components such as an angular velocity sensor and an acceleration sensor included in the displacement detection portion 590.

In such a ninth embodiment, it is also possible to provide the same effect as that in the above-described first embodiment. Meanwhile, although the ring portion 579 is formed in the annular shape in the present embodiment, the shape of the ring portion 579 is not particularly limited. In addition, for example, in a state where the input devices 500 are respectively held in both hands, it may be possible to operate the input portion 571 of each of the input devices 500 held by the fingers of the one hand with the fingers of the other hand.

### <Tenth Embodiment>

Next, an image display system according to a tenth embodiment of the present invention will be described.

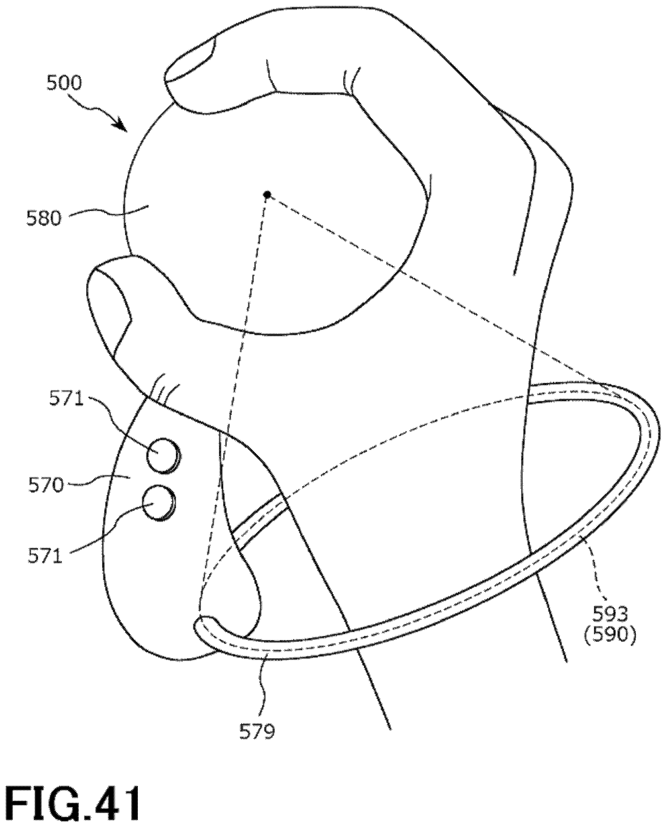

FIG. 41 is a perspective view of an input device of the tenth embodiment of the present invention.

The image display system according to the present embodiment is the same as the image display system of the above-described ninth embodiment except that the configuration of the input device is different from that in the above-described ninth embodiment.

Meanwhile, in the following description, the image display system of the tenth embodiment will be described with a focus on differences from the above-described ninth embodiment and the description for similar particulars will not be given. In addition, in FIG. 41, the same components as those in the above-described embodiment are denoted by the same reference numerals and signs. In addition, the two input devices 500 have the same configuration as each other except that the input devices 500 are configured symmetrically for use with the right-hand and the left-hand. Therefore, hereinafter, one of the input devices 500 will be representatively described and the description for the other one of the input devices 500 will not be given.

As shown in FIG. 41, the input device 500 of the present embodiment includes an elastic input portion 580, a connecting portion 570 connected to the elastic input portion 580 and a ring portion 579 connected to the base end (an end opposite to the elastic input portion 580) of the connecting portion 570. In the configuration of the present embodiment, a user holds the input device 500 by passing his or her hand through the ring portion 579 and directly gripping the elastic input portion 580. In addition, the input portions 571 are provided on the connecting portion 570. In addition, as is the case with the above-described ninth embodiment, the infrared ray emission device 593 which is the device for performing the position tracking for the input device 500 is provided in the ring portion 579.

In addition, the input device 500 is formed in a substantially conical shape in which the annular ring portion 579 is set to the bottom and the center of the elastic input portion 580 is set to the vertex of the conical shape. In other words, the input device 500 is formed in a shape in which the central axis of the ring portion 579 intersects the center of the elastic input portion 580. With this configuration, it is possible to appropriately arrange various sensors of the displacement detection portion 590, the device (the infrared ray emission device 593) for performing the position tracking and the like in the elastic input portion 580 or the ring portion 579. However, the shape of the input device 500 is not particularly limited. For example, the central axis of the ring portion 579 may be shifted from the center of the elastic input portion 580. In this case, it is preferable that the central axis of the ring portion 579 intersects the elastic input portion 580. In addition, the ring portion 579 is not limited to being in the annular shape and may be formed in an elliptical annular shape, a longitudinal annular shape or a polygonal circular shape such as a triangular shape and a quadrilateral shape.

In such a tenth embodiment, it is also possible to provide the same effect as that in the above-described first embodiment.

### <Eleventh Embodiment

Next, an image display system according to an eleventh embodiment of the present invention will be described.

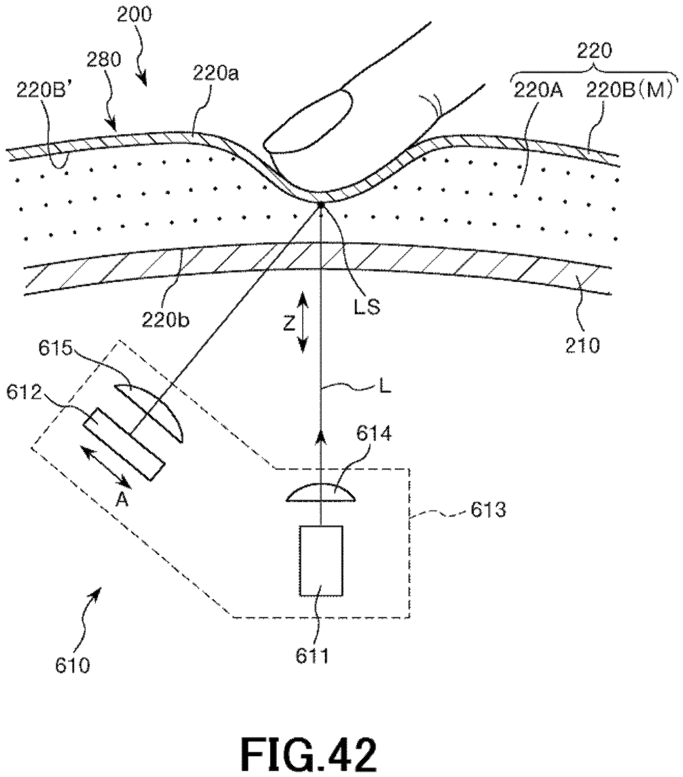

FIG. 42 is a cross-sectional view of an input device of the eleventh embodiment of the present invention.

The image display system according to the present embodiment is the same as the image display system of the above-described first embodiment except that the configuration of the elastic input portion of the input device is different from that in the above-described first embodiment.

Meanwhile, in the following description, the image display system of the eleventh embodiment will be described with a focus on differences from the above-described first embodiment and the description for similar particulars will not be given. In addition, in FIG. 42, the same components as those in the above-described embodiment are denoted by the same reference numerals and signs.

As shown in FIG. 42, in the input device 200 of the present embodiment, the elastic layer 220 includes a light-transmissive layer 220A disposed on the outer circumferential surface of the housing 210 and a light reflection layer 220B laminated on the surface of the light-transmissive layer 220A. The light-transmissive layer 220A has optical transparency. Particularly, the light-transmissive layer 220A is substantially colorless and transparent in the present embodiment. On the other hand, the light reflection layer 220B has light reflectivity for reflecting a beam of light L which will be described later. In addition, the light-transmissive layer 220A is deformed together with the light reflection layer 220B when the input is applied to the elastic input portion 280 and has a function of allowing a shape of an inner surface 220B' of the light reflection layer 220B to change.

A detection portion 610 three-dimensionally detects the deformation of the elastic layer 220 using an optical probe method. By using the optical probe method, it is possible to detect the deformation of the elastic layer 220 in a relatively simple way and with a high degree of accuracy. Hereinafter, the detection portion 610 will be described.

As shown in FIG. 42, the detection portion 610 includes an optical system 613 having a light source 611 which emits the beam of light L toward the inner surface 220B' of the light reflection layer 220B and a semiconductor position detection element 612 (PSD) constituted of a photodiode capable of detecting a one-dimensional position of spot-shaped light on a light receiving surface. Meanwhile, the light source 611 is not particularly limited. For example, a laser diode (LD) can be used as the light source 611.

The beam of light L emitted from the light source 611 is narrowed to a fine light flux by a lens system 614 and an optical spot LS is formed on the inner surface 220B' of the light reflection layer 220B. The image of this optical spot LS is formed on a surface of the semiconductor position detection element 612 by a lens system 615. In such a configuration, the amount of a relative displacement Z between the optical system 613 and the optical spot LS is observed as the amount of movement A of the image on the surface of the semiconductor position detection element 612. That is, it is possible to obtain the amount of the relative displacement Z from the amount of the movement A and to obtain a coordinate value of a portion on which the optical spot LS of the inner surface 220B' is formed.

According to the detection portion 610 having such a configuration, the coordinate value of each portion of the inner surface 220B' in a natural state can be stored as a reference coordinate value and this reference coordinate value and the coordinate value of each portion of the inner surface 220B' are compared with each other in real time, thereby allowing the deformation of the inner surface 220B' to be detected, for example. Further, the detection portion 610 can detect the deformation of the elastic layer 220, that is, the input to the elastic layer 220, on the basis of the deformation of the inner surface 220B'.

Meanwhile, since the detection portion 610 detects the deformation of the elastic layer 220 on the basis of the deformation of the inner surface 220B' as described above, it is preferable that the light reflection layer 220B is thin. For example, it is preferable that a thickness of the light reflection layer 220B is smaller than that of the light-transmissive layer 220A. With this configuration, it is possible to dispose the inner surface 220B' close to the surface (surface on which the input is applied) of the elastic layer 220. Thus, the inner surface 220B' can be deformed more accurately and more drastically with respect to the input. Therefore, the detection accuracy of the detection portion 610 is improved. For this reason, in the present embodiment, it can be also said that the light reflection layer 220B serves as the marker M.

As described above, the elastic layer 220 includes the light reflection layer 220B having the light reflectivity and the light-transmissive layer 220A which is located at the inner side of the light reflection layer 220B and has the optical transparency in the present embodiment. According to such a configuration, since the light-transmissive layer 220A allows the inner surface 220B' of the light reflection layer 220B to be deformed and transmits the beam of light L, the deformation of the elastic layer 220 can be detected by using an optical probe method even from the inside of the housing 210.

In such an eleventh embodiment, it is also possible to provide the same effect as that in the above-described first embodiment. Meanwhile, the detection portion 610 may obtain the coordinate value of each portion of the inner surface 220B' using one optical system 613 and may obtain the coordinate value of each portion of the inner surface 220B' using a plurality of optical systems 613.

### <Twelfth Embodiment

Next, an image display system according to a twelfth embodiment of the present invention will be described.

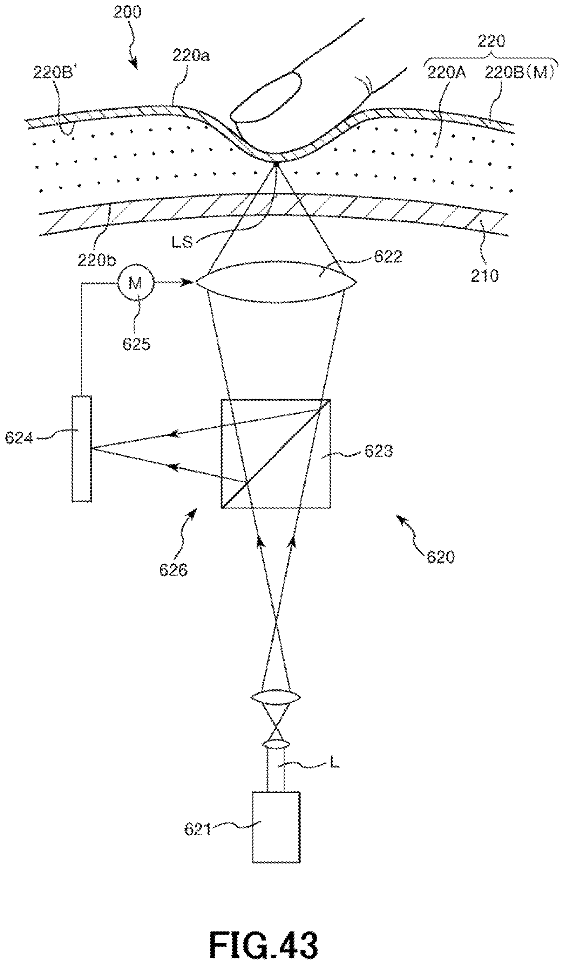

FIG. 43 is a cross-sectional view of an input device of the twelfth embodiment of the present invention.

The image display system according to the present embodiment is the same as the image display system of the above-described eleventh embodiment except that the configuration of the detection portion of the input device is different from that in the above-described eleventh embodiment.

Meanwhile, in the following description, the image display system of the twelfth embodiment will be described with a focus on differences from the above-described eleventh embodiment and the description for similar particulars will not be given. In addition, in FIG. 43, the same components as those in the above-described embodiment are denoted by the same reference numerals and signs.

A detection portion 620 of the present embodiment three-dimensionally detects the deformation of the elastic layer 220 using an optical probe method. Hereinafter, the detection portion 620 will be described.

As shown in FIG. 43, the detection portion 620 includes an optical system 626 having a light source 621 (for example, LD) which emits a beam of light L toward the inner surface 220B' of the light reflection layer 220B, a lens system 622 which focuses the beam of light L, a beam splitter 623 disposed between the light source 621 and the lens system 622, a detector 624 (photodiode) and a motor 625 which moves the lens system 622.

The beam of light L light emitted from the light source 621 is focused by the lens system 622 to form an optical spot LS on the inner surface 220B' of the light reflection layer 220B. An image of the beam of light L reflected from the inner surface 220B' is formed after the beam of light L is reflected from the beam splitter 623 through the lens system 622. The detector 624 is disposed at an image formation point. In addition, the lens system 622 is moved in an optical axis direction thereof by the motor 625 so that the image formation point is always located at the detector 624. A coordinate value of a portion on which the optical spot LS of the inner surface 220B' is formed can be obtained on the basis of the amount of movement of the lens system 622 at this time.

According to the detection portion 620 having such a configuration, the coordinate value of each portion of the inner surface 220B' in a natural state can be stored as a reference coordinate value and this reference coordinate value and the coordinate value of each portion of the inner surface 220B' are compared with each other in real time, thereby allowing the deformation of the inner surface 220B' to be detected, for example. Further, the detection portion 620 can detect the deformation of the elastic layer 220, that is, the input to the elastic layer 220, on the basis of the deformation of the inner surface 220B'.

In such a twelfth embodiment, it is also possible to provide the same effect as that in the above-described first embodiment. Meanwhile, although the detection portion 620 obtains the coordinate value of each portion of the inner surface 220B' using one optical system 626, the detection portion 620 may obtain the coordinate value of each portion of the inner surface 220B' using a plurality of optical systems 626.

### <Thirteenth Embodiment

Next, an image display system according to a thirteenth embodiment of the present invention will be described.

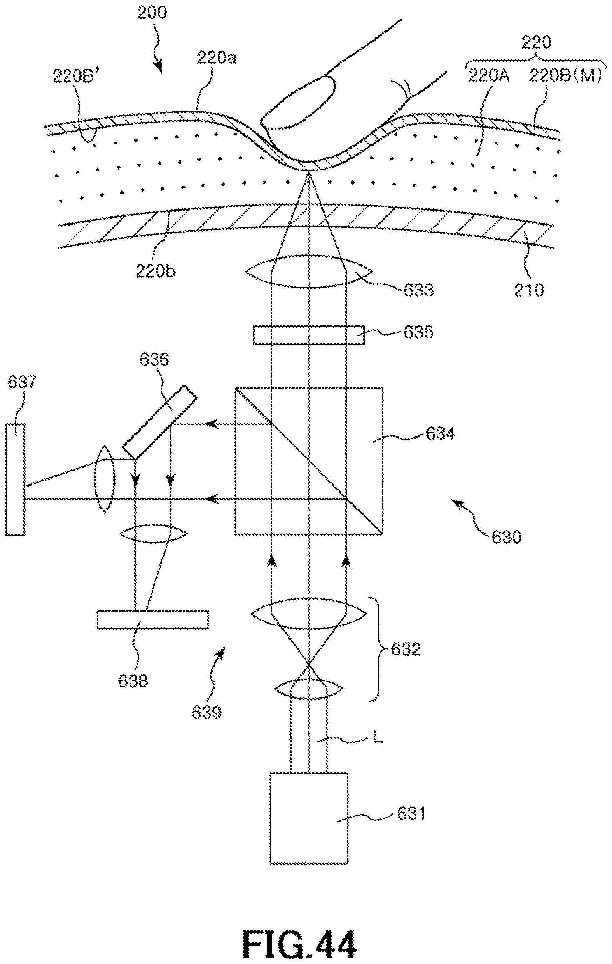

FIG. 44 is a cross-sectional view of an input device of the thirteenth embodiment of the present invention.

The image display system according to the present embodiment is the same as the image display system of the above-described eleventh embodiment except that the configuration of the detection portion of the input device is different from that in the above-described eleventh embodiment.

Meanwhile, in the following description, the image display system of the thirteenth embodiment will be described with a focus on differences from the above-described eleventh embodiment and the description for similar particulars will not be given. In addition, in FIG. 44, the same components as those in the above-described embodiment are denoted by the same reference numerals and signs.

A detection portion 630 of the present embodiment three-dimensionally detects the deformation of the elastic layer 220 using an optical probe method. Hereinafter, the detection portion 630 will be described.

As shown in FIG. 44, the detection portion 630 includes an optical system 639 having a light source 631 (for example, LD) which emits a beam of light L toward the inner surface 220B' of the light reflection layer 220B, a lens system 632 which adjusts the beam of light L to make the beam of light L enlarged parallel light, a lens system 633 which focuses the beam of light L that has passed through the lens system 632, a polarization beam splitter 634 located between the lens systems 632 and 633, a λ/4 plate 635 located between the polarization beam splitter 634 and the lens system 633, a wave-front splitting mirror 636 which splits the beam of light L reflected from the inner surface 220B', a first detector 637 (photodiode) which receives one beam of light L split by the wave-front splitting mirror 636 and a second detector 638 (photodiode) which receives the other beam of light L.

In such a configuration, in a case where the inner surface 220B' is displaced from the focal position of the lens system 633, a reflected light flux changes and a difference occurs between the amounts of light received by the first and second detectors 637 and 638. Therefore, a coordinate value of a portion of the inner surface 220B' which is irradiated with the beam of light L can be obtained on the basis of this difference.

According to the detection portion 630 having such a configuration, the coordinate value of each portion of the inner surface 220B' in a natural state can be stored as a reference coordinate value and this reference coordinate value and the coordinate value of each portion of the inner surface 220B' are compared with each other in real time, thereby allowing the deformation of the inner surface 220B' to be detected, for example. Further, the detection portion 630 can detect the deformation of the elastic layer 220, that is, the input to the elastic layer 220, on the basis of the deformation of the inner surface 220B'.

In such a thirteenth embodiment, it is also possible to provide the same effect as that in the above-described first embodiment. Meanwhile, although the detection portion 630 obtains the coordinate value of each portion of the inner surface 220B' using one optical system 639, the detection portion 630 may obtain the coordinate value of each portion of the inner surface 220B' using a plurality of optical systems 639.

### <Fourteenth Embodiment>

Next, an image display system according to a fourteenth embodiment of the present invention will be described.

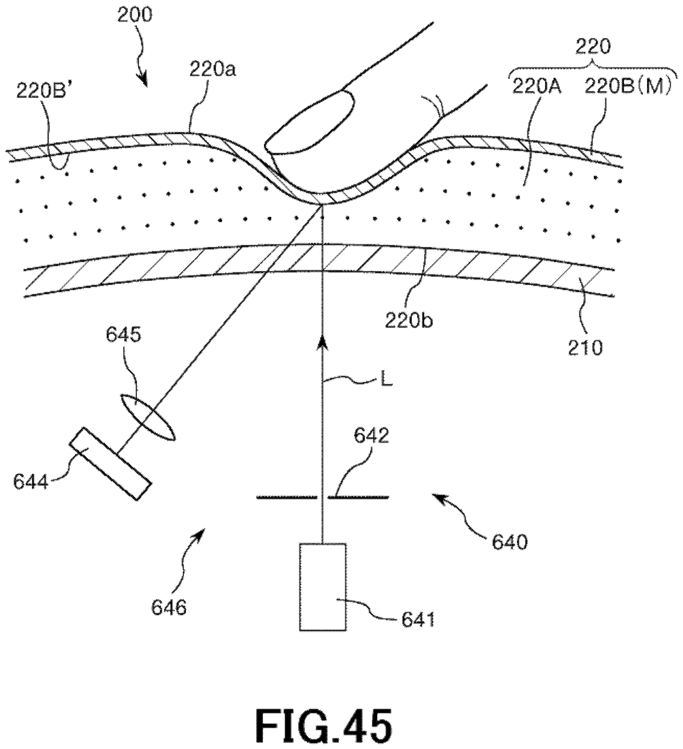

FIG. 45 is a cross-sectional view of an input device of the fourteenth embodiment of the present invention.

The image display system according to the present embodiment is the same as the image display system of the above-described eleventh embodiment except that the configuration of the detection portion of the input device is different from that in the above-described eleventh embodiment.

Meanwhile, in the following description, the image display system of the fourteenth embodiment will be described with a focus on differences from the above-described eleventh embodiment and the description for similar particulars will not be given. In addition, in FIG. 45, the same components as those in the above-described embodiment are denoted by the same reference numerals and signs.

A detection portion 640 of the present embodiment three-dimensionally detects the deformation of the elastic layer 220 using a cross-section measurement method, particularly, a light-section method. Specifically, the inner surface 220B' is irradiated with a slit-shaped beam of light L and the deformation of the elastic layer 220 is detected on the basis of the shape of the beam of light L formed on the inner surface 220B'. By using such a cross-section measurement method (light-section method), it is possible to detect the deformation of the elastic layer 220 in a relatively simple way and with a high degree of accuracy.

As shown in FIG. 45, the detection portion 640 includes an optical system 646 having a light source 641 which emits a beam of light L toward the inner surface 220B' of the light reflection layer 220B, a slit light formation portion 642 which forms the beam of light L in a slit shape, an imaging element 644 which is provided at a position shifted from the optical axis of the beam of light L and captures an image of the slit-shaped beam of light L formed on the inner surface 220B' and a lens system 645 located between the inner surface 220B' and the imaging element 644.

In such a configuration, a cross-sectional shape of a portion of the inner surface 220B' on which the image of the beam of light L is formed can be obtained on the basis of the image obtained by the imaging element 644, that is, the shape of the beam of light L formed on the inner surface 220B'. With this configuration, by scanning the entire inner surface 220B' with the slit-shaped beam of light L to obtain the cross-sectional shape of each portion of the inner surface 220B', it is possible to detect the shape of the inner surface 220B', for example.

According to the detection portion 640 having such a configuration, the shape of the inner surface 220B' in a natural state can be stored as a reference shape and this reference shape and the shape of the inner surface 220B' are compared with each other in real time, thereby allowing the deformation of the inner surface 220B' to be detected, for example. Further, the detection portion 640 can detect the deformation of the elastic layer 220, that is, the input to the elastic layer 220, on the basis of the deformation of the inner surface 220B'.

In such a fourteenth embodiment, it is also possible to provide the same effect as that in the above-described first embodiment. Meanwhile, although the detection portion 640 detects the shape of the entire inner surface 220B' using one optical system 646, the detection portion 640 may detect the shape of the entire inner surface 220B' using a plurality of optical systems 646.

### <Fifteenth Embodiment

Next, an image display system according to a fifteenth embodiment of the present invention will be described.

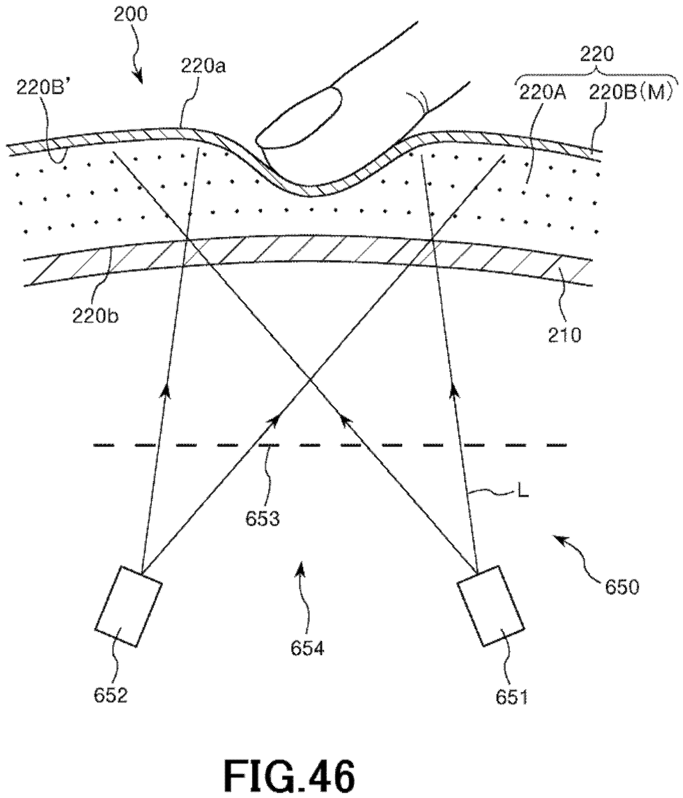

FIG. 46 is a cross-sectional view of an input device of the fifteenth embodiment of the present invention.

The image display system according to the present embodiment is the same as the image display system of the above-described eleventh embodiment except that the configuration of the detection portion of the input device is different from that in the above-described eleventh embodiment.

Meanwhile, in the following description, the image display system of the fifteenth embodiment will be described with a focus on differences from the above-described eleventh embodiment and the description for similar particulars will not be given. In addition, in FIG. 46, the same components as those in the above-described embodiment are denoted by the same reference numerals and signs.

A detection portion 650 of the present embodiment three-dimensionally detects the deformation of the elastic layer 220 using a contour measurement method, particularly, using a moire topography method in which a moire fringe is used. Specifically, a moire fringe image of the inner surface 220B' is obtained and the deformation of the elastic layer 220 is detected on the basis of this moire fringe image. By using such a contour measurement method, it is possible to detect the deformation of the elastic layer 220 in a relatively simple way and with a high degree of accuracy. Hereinafter, the detection portion 650 will be simply described. Meanwhile, the light source 240 is omitted in the present embodiment.

As shown in FIG. 46, the detection portion 650 includes an optical system 654 having a light source 651 which emits a beam of light L, an imaging element 652 and a lattice 653 provided between a plane of the light source 651 and the imaging element 652 and the inner surface 220B'.

In such a configuration, a portion at which the beam of light L emitted from the light source 651 through the lattice 653 and a portion seen by the imaging element 652 through the lattice 653 intersect each other and this portion is captured by the imaging element 652. A substantial contour surface is formed on a surface formed by linking these intersection points and a moire fringe corresponding to the contour surface is formed in the image obtained by the imaging element 652. In a case of using this image as the moire fringe image, the shape of the inner surface 220B' can be obtained on the basis of the moire fringe image.

According to the detection portion 650 having such a configuration, the shape of the inner surface 220B' in a natural state can be stored as a reference shape and this reference shape and the shape of the inner surface 220B' obtained in real time are compared with each other, thereby allowing the deformation of inner surface 220B' to be detected, for example. Further, the detection portion 650 can detect the deformation of the elastic layer 220, that is, the input to the elastic layer 220, on the basis of the deformation of the inner surface 220B'.

In such a fifteenth embodiment, it is also possible to provide the same effect as that in the above-described first embodiment. Meanwhile, although the detection portion 650 detects the shape of the entire inner surface 220B' using one optical system 654, the detection portion 650 may detect the shape of the entire inner surface 220B' using a plurality of optical systems 654.

### <Sixteenth Embodiment

Next, an image display system according to a sixteenth embodiment of the present invention will be described.

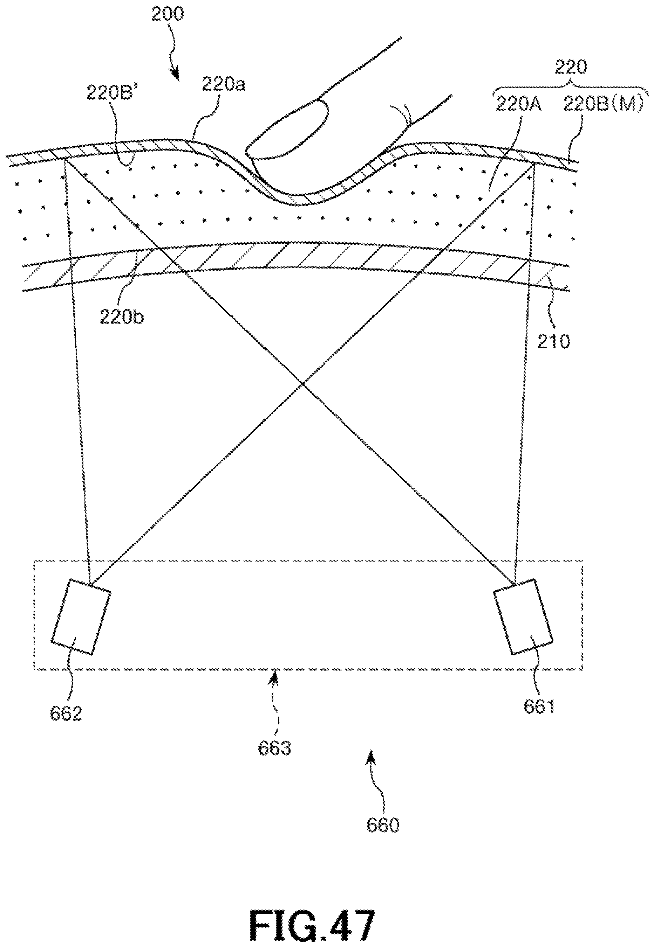

FIG. 47 is a cross-sectional view of an input device of the sixteenth embodiment of the present invention.

The image display system according to the present embodiment is the same as the image display system of the above-described eleventh embodiment except that the configuration of the detection portion of the input device is different from that in the above-described eleventh embodiment.

Meanwhile, in the following description, the image display system of the sixteenth embodiment will be described with a focus on differences from the above-described eleventh embodiment and the description for similar particulars will not be given. In addition, in FIG. 47, the same components as those in the above-described embodiment are denoted by the same reference numerals and signs.

A detection portion 670 of the present embodiment detects the deformation of the elastic layer 220 using a pattern projection method. By using the pattern projection method, it is possible to detect the deformation of the elastic layer 220 in a relatively simple way and with a high degree of accuracy. Hereinafter, the detection portion 660 will be simply described.

As shown in FIG. 47, the detection portion 660 includes an optical system 663 having an image projection unit 661 which projects a reference pattern consisting of a beam of light L onto the inner surface 220B' and an imaging element 662 which captures an image of the reference pattern projected onto the inner surface 220B' from a position shifted from the optical axis of the image projection unit 661. In such a configuration, a shape of a portion of the inner surface 220B' onto which the reference pattern is projected can be detected on the basis of the shape of the reference pattern formed in the image obtained by the imaging element 662. With this configuration, by projecting the reference pattern onto an entire or the like of the inner surface 220B', it is possible to detect the shape of the inner surface 220B'. Meanwhile, the reference pattern which is projected onto the inner surface 220B' is not particularly limited. The reference pattern may have a lattice-shaped pattern in which parallel straight lines are lined up in a state of being separated from each other, for example.

According to the detection portion 660 having such a configuration, the shape of the inner surface 220B' in a natural state can be stored as a reference shape and this reference shape and the shape of the inner surface 220B' obtained in real time are compared with each other, thereby allowing the deformation of the inner surface 220B' to be detected, for example. Further, the detection portion 660 can detect the deformation of the elastic layer 220, that is, the input to the elastic layer 220, on the basis of the deformation of the inner surface 220B'.

In such a sixteenth embodiment, it is also possible to provide the same effect as that in the above-described first embodiment. Meanwhile, the detection portion 660 may detect the shape of the entire inner surface 220B' using one optical system 663 and may detect the shape of the entire inner surface 220B' using a plurality of optical systems 663.

### <Seventeenth Embodiment>

Next, an image display system according to a seventeenth embodiment of the present invention will be described.

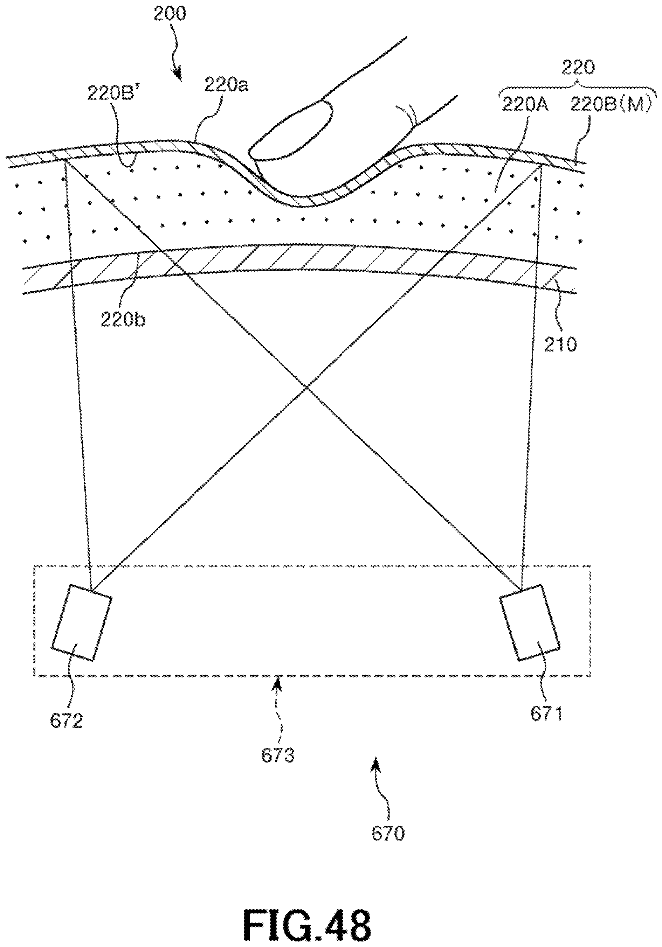

FIG. 48 is a cross-sectional view of an input device of the seventeenth embodiment of the present invention.

The image display system according to the present embodiment is the same as the image display system of the above-described eleventh embodiment except that the configuration of the detection portion of the input device is different from that in the above-described eleventh embodiment.

Meanwhile, in the following description, the image display system of the seventeenth embodiment will be described with a focus on differences from the above-described eleventh embodiment and the description for similar particulars will not be given. In addition, in FIG. 48, the same components as those in the above-described embodiment are denoted by the same reference numerals and signs.

A detection portion 670 of the present embodiment detects the deformation of the elastic layer 220 using a phase shift method. By using such a phase shift method, it is possible to detect the deformation of the elastic layer 220 in a relatively simple way and with a high degree of accuracy. Hereinafter, the detection portion 670 will be simply described.

As shown in FIG. 48, the detection portion 670 includes an optical system 673 having an image projection unit 671 which projects a reference pattern onto the inner surface 220B' and an imaging element 672 which captures an image of the reference pattern projected onto the inner surface 220B' from a position shifted from the optical axis of the image projection unit 671.

In such a configuration, a fringe pattern in which a sine wave is represented by the light and darkness of the luminance value is projected onto the inner surface 220B' as the reference pattern, for example. Further, the reference pattern projected onto the inner surface 220B' is captured by the imaging element 672. The reference pattern is projected four times by shifting ð/2 and captured every time by the imaging element 672. A shape of a portion of the inner surface 220B' onto which the reference pattern is projected can be detected from the four images obtained in this manner. Meanwhile, the reference pattern, the way to shift the reference pattern and the like are not particularly limited.

According to the detection portion 670 having such a configuration, the shape of the inner surface 220B' in a natural state can be stored as a reference shape and this reference shape and the shape of the inner surface 220B' obtained in real time are compared with each other, thereby allowing the deformation of inner surface 220B' to be detected, for example. Further, the detection portion 670 can detect the deformation of the elastic layer 220, that is, the input to the elastic layer 220, on the basis of the deformation of the inner surface 220B'.

In such a seventeenth embodiment, it is also possible to provide the same effect as that in the above-described first embodiment. Meanwhile, the detection portion 670 may detect the shape of the entire inner surface 220B' using one optical system 673 and may detect the shape of the entire inner surface 220B' using a plurality of optical systems 673.

Meanwhile, in the above-described eleventh embodiment to the present embodiment, although the methods of detecting the change in the shape of the inner surface 220B' using the optical method and the methods of detecting the input to the elastic input portion 280 have been described, the methods of detecting the change in the shape of the inner surface 220B' are not limited to the eleventh embodiment to the present embodiment. That is, as long as the shape of the inner surface 220B' can be detected, any kind of method can be used. For example, in a case of using a method so-called "point measurement method", an ultrasonic wave method using an ultrasonic probe, a magnetic method using magnetism or the like can be used in addition to the optical probe method described in the aforementioned eleventh, twelfth and thirteenth embodiments. In addition, in a case of using a method so-called "surface measurement method", it is possible to use a silhouette method, an optical envelope method, a cross-sectional measurement method including the light-section method or the like described in the above-described fourteenth embodiment, an interference fringe method, a holography method and a contour measurement method including the moire topography method or the like of the above-described fifteenth embodiment.

### <Eighteenth Embodiment

Next, an image display system according to an eighteenth embodiment of the present invention will be described.

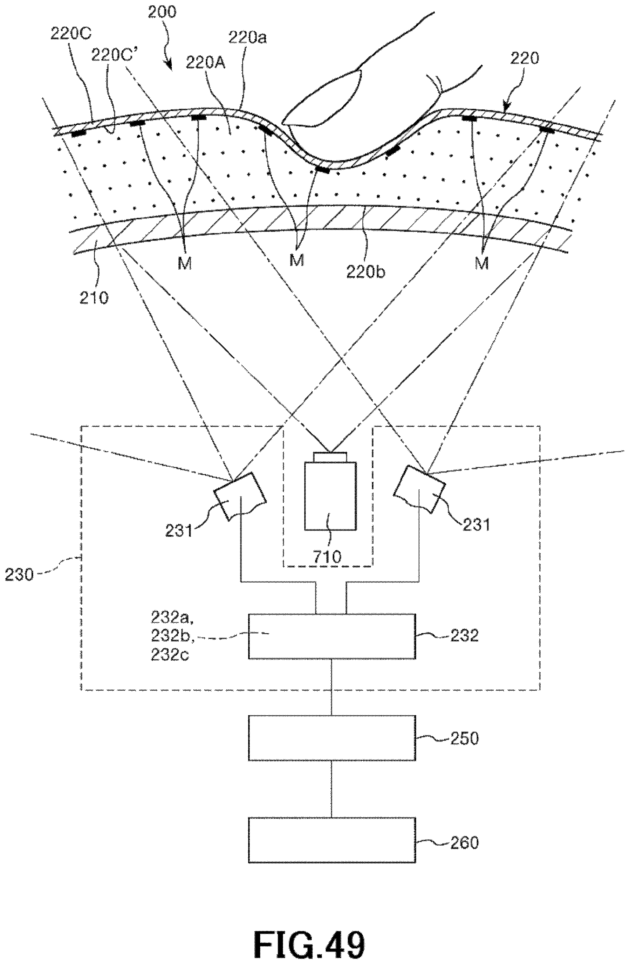

FIG. 49 is a cross-sectional view of an input device of the eighteenth embodiment of the present invention.

The image display system according to the present embodiment is the same as the image display system of the above-described first embodiment except that the configuration of the elastic input portion of the input device is different from that in the above-described first embodiment.

Meanwhile, in the following description, the image display system of the eighteenth embodiment will be described with a focus on differences from the above-described first embodiment and the description for similar particulars will not be given. In addition, in FIG. 49, the same components as those in the above-described embodiment are denoted by the same reference numerals and signs.

As shown in FIG. 49, in the input device 200 of the present embodiment, the elastic layer 220 includes a light-transmissive layer 220A disposed on the outer circumferential surface of the housing 210 and an image display layer 220C laminated on the surface of the light-transmissive layer 220A. The light-transmissive layer 220A has optical transparency. Particularly, the light-transmissive layer 220A is substantially colorless and transparent in the present embodiment. On the other hand, the image display layer 220C is a layer having light reflectivity, on which an image can be displayed by light emitted from an image projection unit 710 described later. The light-transmissive layer 220A is deformed together with the image display layer 220C when the input is applied to the elastic input portion 280 and has a function of allowing a shape of an inner surface 220C' of the image display layer 220C to change.

In addition, the input device 200 of the present embodiment includes the image projection unit 710 disposed within the housing 210. Meanwhile, although the image projection unit 710 is not particularly limited, the image projection unit 710 can be configured to include a liquid crystal type projector, an optical scanning type projector or the like, for example.

A predetermined image is displayed on the inner surface 220C' of the image display layer 220C with the light emitted from the image projection unit 710. Particularly, markers M are displayed on the inner surface 220C' of the image display layer 220C by the image projection unit 710 in the present embodiment. That is, in the input device 200 of the present embodiment, by displaying the markers M on the inner surface 220C', the markers M can be disposed on the elastic layer 220. Thereby, since the pattern of the markers M can be changed in accordance with a purpose, the input device 200 can provide excellent convenience.

Since such markers M are displaced in association with the deformation of the inner surface 220C', the detection portion 230 can detect the deformation of the inner surface 220C' by detecting the displacement of the markers M. Further, the detection portion 230 can detect the deformation of the elastic layer 220, that is, the input to the elastic layer 220, on the basis of the deformation of the inner surface 220C'.

In such an eighteenth embodiment, it is also possible to provide the same effect as that in the above-described first embodiment.

### <Nineteenth Embodiment

Next, an image display system according to a nineteenth embodiment of the present invention will be described.

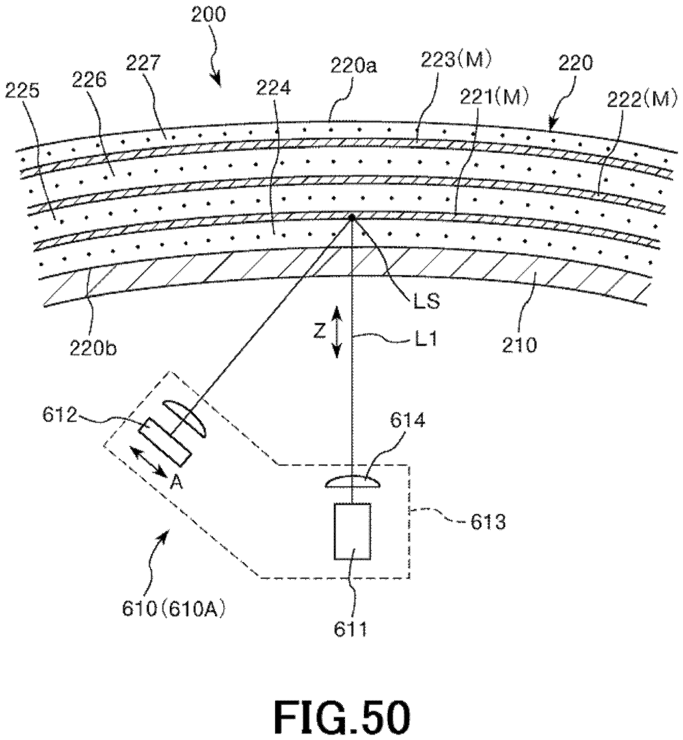

FIGs. 50 to 52 are cross-sectional views of an input device of the nineteenth embodiment of the present invention.

The image display system according to the present embodiment is the same as the image display system of the above-described first embodiment except that the configuration of the elastic input portion of the input device is different from that in the above-described first embodiment.

Meanwhile, in the following description, the image display system of the nineteenth embodiment will be described with a focus on differences from the above-described first embodiment and the description for similar particulars will not be given. In addition, in FIG. 50, the same components as those in the above-described embodiment are denoted by the same reference numerals and signs.

As shown in FIG. 50, in the input device 200 of the present embodiment, a first marker 221 formed in a film shape (sheet shape) is disposed between the first elastic layer 224 and the second elastic layer 225. In addition, a second marker 222 formed in a film shape (sheet shape) is disposed between the second elastic layer 225 and the third elastic layer 226. In addition, a third marker 223 formed in a film shape (sheet shape) is disposed between the third elastic layer 226 and the protective layer 227. Each of these first, second and third markers 221, 222 and 223 is deformed in association with the deformation of the elastic layer 220.

In addition, each of the first marker 221, the second marker 222 and the third marker 223 reflects light having a specific wavelength and transmits light having the other wavelengths than the specific wavelength. In addition, the first marker 221, the second marker 222 and the third marker 223 are configured to reflect different light each having different wavelengths with each other. As each of the first marker 221, the second marker 222 and the third marker 223, an optical filter such as a dichroic filter can be used, for example.

In addition, the input device 200 of the present embodiment includes the detection portion 610 used in the above-described eleventh embodiment. In addition, as shown in FIGs. 50 to 52, the detection portion 610 includes a first detection portion 610A which detects the deformation of the first marker 221, a second detection portion 610B which detects the deformation of the second marker 222 and a third detection portion 610C which detects the deformation of the third marker 223.

As shown in FIG. 50, in the first detection portion 61 0A, a beam of light L1 having a wavelength which can be reflected from the first marker 221 is emitted from the light source 611. On the other hand, the semiconductor position detection element 612 has a bandpass filter (not shown) disposed therein, which transmits the beam of light L1 and prevents beams of light L2 and L3 described later from being transmitted. Therefore, the first detection portion 61 0A can detect the deformation of the first marker 221 using the beam of light L1. In such a first detection portion 610A, the coordinate value of each portion of the first marker 221 in a natural state can be stored as a reference coordinate value and this reference coordinate value and the coordinate value of each portion of the first marker 221 are compared with each other in real time, thereby allowing the deformation of the first marker 221 to be detected, for example.

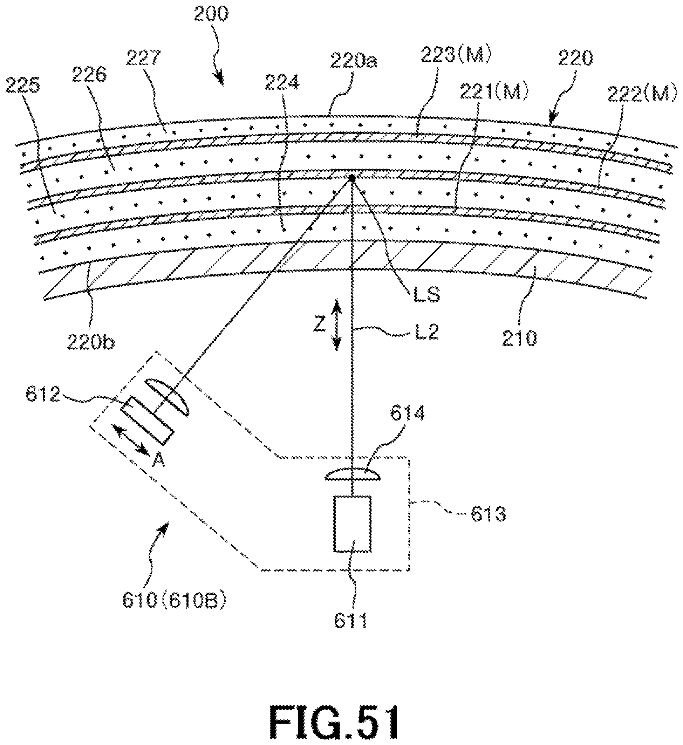

In addition, as shown in FIG. 51, in the second detection portion 610B, the beam of light L2 having a wavelength which can be reflected from the second marker 222 is emitted from the light source 611. Meanwhile, this beam of light L2 can pass through the first marker 221. On the other hand, the semiconductor position detection element 612 has a bandpass filter (not shown) disposed therein, which transmits the beam of light L2 and prevents the beams of light L1 and L3 from being transmitted. Therefore, the second detection portion 61 0B can detect the deformation of the second marker 222 using the beam of light L2. In such a second detection portion 610B, the coordinate value of each portion of the second marker 222 in a natural state can be stored as a reference coordinate value and this reference coordinate value and the coordinate value of each portion of the second marker 222 are compared with each other in real time, thereby allowing the deformation of the second marker 222 to be detected, for example.

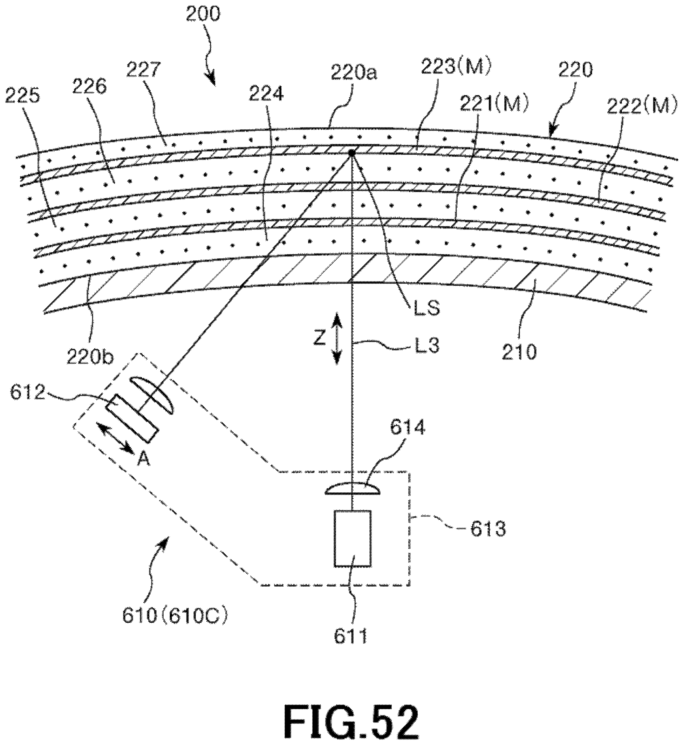

In addition, as shown in FIG. 52, in the third detection portion 610C, the beam of light L3 having a wavelength which can be reflected from the third marker 223 is emitted from the light source 611. Meanwhile, this beam of light L3 can pass through the first marker 221 and the second marker 222. On the other hand, the semiconductor position detection element 612 has a bandpass filter (not shown) disposed therein, which transmits the beam of light L3 and prevents the beams of light L1 and L2 from being transmitted. Therefore, the third detection portion 610C can detect the deformation of the third marker 223 using the beam of light L3. In such a third detection portion 610C, the coordinate value of each portion of the third marker 223 in a natural state can be stored as a reference coordinate value and this reference coordinate value and the coordinate value of each portion of the third marker 223 are compared with each other in real time, thereby allowing the deformation of the third marker 223 to be detected, for example.

According to the detection portion 610 having such a configuration, the deformation of the elastic layer 220 can be detected on the basis of the deformation of the first marker 221 detected in the first detection portion 610A, the deformation of the second marker 222 detected in the second detection portion 610B and the deformation of the third marker 223 detected in the third detection portion 610C.

In such a nineteenth embodiment, it is also possible to provide the same effect as that in the above-described first embodiment. Meanwhile, although the present embodiment includes the three detection portions 610A, 610B and 610C, the present invention is not limited thereto. It is possible to take a configuration in which only one detection portion 610 is used. In this case, for example, the light source 611 may be configured to emit the beams of light L1, L2 and L3 and periodically switch the beams of light L1, L2 and L3. Further, the deformation of the first, second and third markers 221, 222 and 223 may be detected in a time-division manner.

In addition, for example, the detection portions 620, 630, 640, 650, 660, and 670 as described in the above-described twelfth embodiment to seventeenth embodiment may be used instead of the detection portion 610.

### INDUSTRIAL APPLICABILITY

The input device of the present invention comprises the elastic input portion having the elastic layer in which the first surface to which the external force should be inputted and the second surface on the opposite side of the first surface are defined and the marker which is disposed in the elastic layer and displaced in association with deformation of the elastic layer; and the detection portion which is positioned on the side of the second surface of the elastic layer and detects the deformation of the elastic layer on the basis of the displacement of the marker. Therefore, for example, when a user presses the elastic layer to deform the elastic layer, the detection portion detects this deformation. This makes it possible to detect the input to the elastic input portion. Among other things, since the user can be given the sense of touching something due to the repulsion of the elastic layer, the user can perform the intuitive input. For the reasons stated above, the input device of the present invention is industrially applicable.

**DESCRIPTION OF REFERENCE SIGNS**

| | | | |
|---|---|---|---|
| 100 | Image display system | 230 | Detection portion |
| 200 | Input device | 231 | Camera |
| 210 | Housing | 232 | Processing unit |
| 211 | Support member | 232a | CPU |
| 220 | Elastic layer | 232b | Memory |
| 220A | Light-transmissive layer | 232c | Storage unit |
| 220B | Light reflection layer | 240 | Light source |
| 220B' | Inner surface | 241 | Light-emitting portion |
| 220C | Image display layer | 250 | Signal generation portion |
| 220C' | Inner surface | 260 | Transmission portion |
| 220a | Outer circumferential surface | 270 | Leg |
| 220b | Inner circumferential surface | 280 | Elastic input portion |
| 221 | First marker | 290 | Displacement detection portion |
| 222 | Second marker | 291 | Acceleration sensor |
| 223 | Third marker | 292 | Angular velocity sensor |
| 224 | First elastic layer | 293 | Infrared ray emission device |
| 225 | Second elastic layer | 300 | Image display device |
| 226 | Third elastic layer | 310 | Screen |
| 227 | Protective layer | 400 | Terminal |
| 228 | Reference marker | 500 | Input device |
| 229 | Exposed marker | 500' | Input device set |
| 510 | Housing | 639 | Optical system |
| 520 | Elastic layer | 640 | Detection portion |
| 530 | Detection portion | 641 | Light source |
| 540 | Light source | 642 | Slit light formation portion |
| 550 | Signal generation portion | 644 | Imaging element |
| 560 | Transmission portion | 645 | Lens system |
| 570 | Connecting portion | 646 | Optical system |
| 571 | Input portion | 650 | Detection portion |
| 572 | First input button | 651 | Light source |
| 573 | Second input button | 652 | Imaging element |
| 574 | Input button | 653 | Lattice |
| 575 | Insertion portion | 654 | Optical system |
| 579 | Ring portion | 660 | Detection portion |
| 580 | Elastic input portion | 661 | Image projection unit |
| 590 | Displacement detection portion | 662 | Imaging element |
| 593 | Infrared ray emission device | 663 | Optical system |
| 610 | Detection portion | 670 | Detection portion |
| 610A | First detection portion | 671 | Image projection unit |
| 610B | Second detection portion | 672 | Imaging element |
| 610C | Third detection portion | 673 | Optical system |
| 611 | Light source | 700 | Image projection unit |
| 612 | Semiconductor position detection element | 710 | Image projection unit |
| 613 | Optical system | A | Amount of movement |
| 614 | Lens system | L | Light |
| 615 | Lens system | L1 | Light |
| 620 | Detection portion | L2 | Light |
| 621 | Light source | L3 | Light |
| 622 | Lens system | LE | Lens |
| 623 | Beam splitter | LS | Optical spot |
| 624 | Detector | M | Marker |
| 625 | Motor | Q | Light guide portion |
| 626 | Optical system | S | Internal space |
| 630 | Detection portion | S2 | Space |
| 631 | Light source | X | Virtual stereoscopic structure |
| 632 | Lens system | Z | Amount of relative displacement |
| 633 | Lens system | | |
| 634 | Polarization beam splitter | | |
| 635 | λ/4 plate | | |
| 636 | Wave-front splitting mirror | | |
| 637 | First detector | | |
| 638 | Second detector | | |

## Claims

1. An input device (200) comprising:-
a support portion (210) having an outer surface and an internal space (S);
wherein the support portion (210) is constituted of a hard material and has optical transparency;
an elastic input portion (280) comprising an elastic layer (220) deformable by a device user;
wherein the elastic layer has an outer surface for deforming by a user, and an inner surface, on an opposite side of the outer surface of the elastic layer, so as to cover and be supported by the outer surface of the support portion (210);
a marker (M) disposed in the elastic layer (220) and displaced in association with deformation of the elastic layer (220);
a detection portion (230) disposed within the internal space (S);
**characterized by**
a reference marker (228) disposed on the support portion (210) and which is not displaced due to the deformation of the elastic layer (220); and
the detection portion (230) detecting deformation of the elastic layer (220) on the basis of displacement of the marker (M) with respect to the reference marker (228).

2. An input device (200) as claimed in claim 1, further comprising an image projection unit (700); wherein the marker (M) is displayed on the elastic layer (220) by the image projection unit (700).

3. An input device (200) as claimed in claim 1 or 2, wherein the marker (M) includes a first marker (221) and a second marker (222) which are disposed so as to be shifted in a thickness direction of the elastic layer (220) with each other.

4. An input device (200) as claimed in claim 3, wherein the elastic layer (220) includes a first elastic layer (224) having the first marker (221) and a second elastic layer (225) which is disposed on the first elastic layer (224) and has the second marker (222).

5. An input device (200) as claimed in claim 3 or 4, wherein the first marker (221) and the second marker (222) are different from each other in at least one of shape and hue.

6. An input device (200) as claimed in any one of claims 1 to 5, wherein the marker (M) includes an exposed marker (229) which is exposed on the outer surface of the elastic layer.

7. An input device (200) as claimed in any one of claims 1 to 6, wherein the detection portion (230) includes a photographing portion (231) for photographing the elastic layer (220) and detects the deformation of the elastic layer (220) on the basis of image data of the elastic layer (220) photographed by the photographing portion (231).

8. An input device (200) as claimed in claim 7, wherein the detection portion (230)detects the deformation of the elastic layer (220) using a stereo photographic method.

9. An input device (200) as claimed in any one of claims 1 to 8, wherein the outer surface of the elastic layer has a convex shape protruding toward an opposite side of the inner surface.

10. An input device (200) as claimed in any one of claims 1 to 9, further comprising a connecting portion (570) which is connected to the elastic input portion (580).

11. An input device (200) as claimed in claim 10, further comprising an input portion (571) which is disposed on the connecting portion (570).

12. An input device (200) as claimed in claim 10 or 11, wherein the connecting portion (570) is a holding portion to be held by a user.

13. An input device (200) as claimed in any one of claims 1 to 12, wherein the support portion (210) has a spherical shape.

14. An image display system (100) comprising:-
the input device (200) defined by any one of claims 1 to 13; and
an image display device (300) which displays an image.

## Patentansprüche

1. Ein Eingabegerät (200), umfassend:-
Einen Stützabschnitt (210) mit einer Außenfläche und einem Innenraum (S);
wobei der Stützabschnitt (210) aus einem harten Material besteht und optisch durchsichtig ist; einen elastischen Eingabeabschnitt (280), der eine elastische Schicht (220) aufweist, die von einem Gerätenutzer verformt werden kann;
wobei die elastische Schicht eine Außenfläche hat, die von einem Benutzer verformt werden kann, und eine Innenfläche, auf einer gegenüberliegenden Seite der Außenfläche der elastischen Schicht,
um die Außenschicht des Stützabschnitt (210) abzudecken und von diesem gehalten zu werden;
eine Markierung (M) an der elastischen Schicht (220) und verschoben in Verbindung mit der Verformung der elastischen Schicht (220);
einen Detektionsabschnitt (230) im Innenraum (S);
**gekennzeichnet durch**
eine Referenzmarkierung (228) am Stützabschnitt (210), die nicht aufgrund der Verformung der elastischen Schicht (220) verschoben wird; und
der Detektionsabschnitt (230), der die Verformung der elastischen Schicht (220) basierend auf der Verschiebung der Markierung (M) im Verhältnis zur ReferenzMarkierung (228) erfasst.

2. Ein Eingabegerät (200) nach Anspruch 1, ferner umfassend eine Bildprojektionseinheit (700);
wobei die Markierung (M) auf der elastischen Schicht (220) durch die Bildprojektionseinheit (700) angezeigt wird.

3. Ein Eingabegerät (200) nach Anspruch 1 oder 2, wobei die Markierung (M) eine erste Markierung (221) und eine zweite Markierung (222) beinhaltet, die so angeordnet sind, dass sie zueinander in eine Dicken-Richtung der elastischen Schicht (220) verschoben werden.

4. Ein Eingabegerät (200) nach Anspruch 3, wobei die elastische Schicht (220) eine erste elastische Schicht (224) mit der ersten Markierung (221) und eine zweite elastische Schicht (225) beinhaltet, die auf der ersten elastischen Schicht (224) angeordnet ist und die zweite Markierung (222) trägt.

5. Ein Eingabegerät (200) nach Anspruch 3 oder 4, wobei sich die erste Markierung (221) und die zweite Markierung (222) in mindestens entweder Form oder Farbton unterscheiden.

6. Ein Eingabegerät (200) nach einem der Ansprüche 1 bis 5, wobei die Markierung (M) eine freiliegende Markierung (229) beinhaltet, die an der Außenfläche der elastischen Schicht freiliegt.

7. Ein Eingabegerät (200) nach einem der Ansprüche 1 bis 6, wobei der Detektionsabschnitt (230) einen Fotografierabschnitt (231) für das Fotografieren der elastischen Schicht (220) beinhaltet und die Erfassung der Verformung der elastischen Schicht (220) basierend auf den Bilddaten der elastischen Schicht (220) beinhaltet, die von dem Fotografierabschnitt (231) fotografiert wurde.

8. Ein Eingabegerät (200) nach Anspruch 7, wobei der Detektionsabschnitt (230) die Verformung der elastischen Schicht (220) unter Verwendung eines Stereo-Fotografierverfahrens erfasst.

9. Ein Eingabegerät (200) nach einem der Ansprüche 1 bis 8, wobei die Außenfläche der elastischen Schicht eine konvexe Form hat, die in eine gegenüberliegende Seite der Innenfläche hineinragt.

10. Ein Eingabegerät (200) nach einem der Ansprüche 1 bis 9, ferner umfassend einen Verbindungsabschnitt (570), der mit dem elastischen Eingabeabschnitt (580) verbunden ist.

11. Ein Eingabegerät (200) nach Anspruch 10, ferner umfassend einen Eingabeabschnitt (571), der auf dem Verbindungsabschnitt (570) angeordnet ist.

12. Ein Eingabegerät (200) nach Anspruch 10 oder 11, wobei der Verbindungsabschnitt (570) ein Halteabschnitt ist, der von einem Benutzer gehalten wird.

13. Ein Eingabegerät (200) nach einem der Ansprüche 1 bis 12, wobei der Stützabschnitt (210) eine Halbkugelform hat.

14. Ein Bildanzeigesystem (100), umfassend:-
Das Eingabegerät (200), das von einem der Ansprüche 1 bis 13 definiert ist; und
ein Bildanzeigegerät (300), das ein Bild anzeigt.

## Revendications

1. Dispositif d'entrée (200) comprenant :
une partie support (210) présentant une surface extérieure et un espace interne (S) ;
dans lequel la partie support (210) est constituée d'un matériau dur et présente une transparence optique ; une partie entrée élastique (280) comprenant une couche élastique (220) déformable par un utilisateur de dispositif ;
dans lequel la couche élastique présente une surface extérieure destinée à être déformée par un utilisateur et une surface intérieure, sur un côté opposé de la surface extérieure de la couche élastique,
de manière à couvrir et être supportée par la surface extérieure de la partie support (210) ;
un marqueur (M) disposé dans la couche élastique (220) et déplacé en association avec la déformation de la couche élastique (220) ;
une partie détection (230) disposée à l'intérieur de l'espace interne (S) ;
**caractérisée par**
un marqueur de référence (228) disposé sur la partie support (210) et qui n'est pas déplacé en raison de la déformation de la couche élastique (220) ; et
la partie détection (230) détectant la déformation de la couche élastique (220) sur la base du déplacement du marqueur (M) par rapport au marqueur de référence (228).

2. Dispositif d'entrée (200) suivant la revendication 1, comprenant en outre une unité de projection d'image (700) ;
dans lequel le marqueur (M) est affiché sur la couche élastique (220) par l'unité de projection d'image (700).

3. Dispositif d'entrée (200) suivant la revendication 1 ou 2, dans lequel le marqueur (M) comporte un premier marqueur (221) et un second marqueur (222) qui sont disposés de manière à être décalés dans la direction de l'épaisseur de la couche élastique (220) l'un par rapport à l'autre.

4. Dispositif d'entrée (200) suivant la revendication 3, dans lequel la couche élastique (220) comporte une première couche élastique (224) présentant le premier marqueur (221) et une seconde couche élastique (225) qui est disposée sur la première couche élastique (224) et qui présente le second marqueur (222).

5. Dispositif d'entrée (200) suivant la revendication 3 ou 4, dans lequel le premier marqueur (221) et le second marqueur (222) sont différents l'un de l'autre par au moins la forme et/ou la teinte.

6. Dispositif d'entrée (200) suivant l'une quelconque des revendications 1 à 5, dans lequel le marqueur (M) comporte un marqueur apparent (229) qui est apparent sur la surface extérieure de la couche élastique.

7. Dispositif d'entrée (200) suivant l'une quelconque des revendications 1 à 6, dans lequel la partie détection (230) comporte une partie photographie (231) destinée à photographier la couche élastique (220) et détecte la déformation de la couche élastique (220) sur la base de données d'image de la couche élastique (220) photographiée par la partie photographie (231).

8. Dispositif d'entrée (200) suivant la revendication 7, dans lequel la partie détection (230) détecte la déformation de la couche élastique (220) à l'aide d'un procédé de photographie stéréo.

9. Dispositif d'entrée (200) suivant l'une quelconque des revendications 1 à 8, dans lequel la surface extérieure de la couche élastique présente une forme convexe faisant saillie vers un côté opposé de la surface intérieure.

10. Dispositif d'entrée (200) suivant l'une quelconque des revendications 1 à 9, comprenant en outre une partie connexion (570) qui est connectée à la partie entrée élastique (580).

11. Dispositif d'entrée (200) suivant la revendication 10, comprenant en outre une partie entrée (571) qui est disposée sur la partie connexion (570).

12. Dispositif d'entrée (200) suivant la revendication 10 ou 11, dans lequel la partie connexion (570) est une partie de maintien devant être maintenue par un utilisateur.

13. Dispositif d'entrée (200) suivant l'une quelconque des revendications 1 à 12, dans lequel la partie support (210) présente une forme sphérique.

14. Système d'affichage d'image (100) comprenant ;
le dispositif d'entrée (200) défini par l'une quelconque des revendications 1 à 13 ; et
un dispositif d'affichage d'image (300) qui affiche une image.
